(19) **Europäisches Patentamt / European Patent Office / Office européen des brevets**

(11) **EP 4 308 971 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **22713869.0**

(22) Anmeldetag: **04.03.2022**

(51) Internationale Patentklassifikation (IPC):
*G01S 13/60* (2006.01)    *G01S 13/87* (2006.01)
*G01S 13/88* (2006.01)    *G01S 17/58* (2006.01)
*G01S 17/875* (2020.01)   *G01S 17/88* (2006.01)
*B60W 40/10* (2012.01)    *G01S 13/34* (2006.01)
*G01S 13/931* (2020.01)

(52) Gemeinsame Patentklassifikation (CPC):
**G01S 13/874; G01S 13/60; G01S 13/88;**
**G01S 17/58; G01S 17/875; G01S 17/88;**
G01S 7/0232; G01S 7/0235; G01S 13/343;
G01S 13/605; G01S 2013/9323

(86) Internationale Anmeldenummer:
**PCT/EP2022/055591**

(87) Internationale Veröffentlichungsnummer:
**WO 2022/194576 (22.09.2022 Gazette 2022/38)**

(54) **VERFAHREN ZUR BESTIMMUNG EINES BEWEGUNGSZUSTANDS EINES STARREN KÖRPERS**

METHOD FOR DETERMINING A MOVEMENT STATE OF A RIGID BODY

PROCÉDÉ DE DÉTERMINATION D'UN ÉTAT DE MOUVEMENT D'UN CORPS RIGIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **18.03.2021   DE 102021202641**

(43) Veröffentlichungstag der Anmeldung:
**24.01.2024   Patentblatt 2024/04**

(73) Patentinhaber: **Robert Bosch GmbH**
**70442 Stuttgart (DE)**

(72) Erfinder:
• WYNE, Mughees Ahmad
  63065 Offenbach (DE)
• SCHERER, Sebastian
  72074 Tuebingen (DE)

(56) Entgegenhaltungen:
DE-A1- 10 252 323        DE-A1- 102017 214 022
DE-A1- 102019 202 178    US-A1- 2020 241 124
US-A1- 2021 063 560

**Beschreibung**

Die vorliegende Erfindung betrifft ein Verfahren zur Bestimmung eines Bewegungszustands eines starren Körpers relativ zu einer Umgebung mittels einer Vielzahl von Messdatensätzen und ein Verfahren zu Bestimmung einer relativen Position und/oder einer relativen Orientierung sowie eine Recheneinheit und ein Computerprogramm zu deren Durchführung.

Hintergrund der Erfindung

Odometrie beschäftigt sich mit dem Problem, die Position und die Orientierung eines mobilen Körpers, etwa eines Fahrzeugs und/oder Roboters, zu bestimmen. Dazu kann der Bewegungszustand des Körpers bestimmt werden, z.B. eine Geschwindigkeit und/oder eine Winkelgeschwindigkeit, denen Unterschiede zeitlich aufeinanderfolgender Positionen bzw. Orientierungen des Körpers entsprechen. Zur Bestimmung des Bewegungszustands können inertiale Messeinrichtungen, d.h. Beschleunigungssensoren und Gyroskope, eingesetzt werden, die den Bewegungszustand oder Komponenten davon direkt durch Messung bestimmen. Auch können am Körper angebrachte Kameras verwendet werden, deren Bild- bzw. Videoaufnahmen mittels geeigneter Bildverarbeitungssoftware eine Einschätzung des Bewegungszustands ermöglichen.

Die US 2020/0241124 A1 betrifft ein Verfahren zum Betreiben eines Radarsystems eines Fahrzeugs, wobei eine Schätzung der Eigengeschwindigkeit des Fahrzeugs mittels einer Regression erfolgen kann, die auf Radardaten basiert, die die radiale Relativgeschwindigkeit und einen Einfallswinkel umfassen. DE 10 2017 214 022 A1 betrifft die Ermittlung von Egodaten, die die Eigenbewegung eines Kraftfahrzeugs beschreiben. Die DE 10 2019 202 178 A1 betrifft ein Verfahren zur Bestimmung der Geschwindigkeit über Grund und des Richtungswechsels eines Fahrzeugs. Die US 2021/0063560 A1 betrifft die Schätzung einer Geschwindigkeit in einer Ebene aus Radarmessungen.

Offenbarung der Erfindung

Erfindungsgemäß werden ein Verfahren zur Bestimmung eines Bewegungszustands eines starren Körpers relativ zu einer Umgebung mittels einer Vielzahl von Messdatensätzen und ein Verfahren zur Bestimmung einer relativen Position und/oder einer relativen Orientierung sowie eine Recheneinheit und ein Computerprogramm zu deren Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, Bedingungsmengen aus Messdatensätzen und basierend darauf mittels einer Regressionsanalyse den Bewegungszustand zu bestimmen. Durch die Bildung von Bedingungsmengen können gezielt Messdatensätze ausgesucht werden, so dass eine hohe Genauigkeit der Bewegungszustand-Bestimmung erreicht werden kann.

Im Einzelnen verwendet das Verfahren eine Vielzahl von Messdatensätzen zu Objekten in der Umgebung des Körpers, wobei jeder Messdatensatz jeweils einen Messzeitpunkt und eine Dopplergeschwindigkeit und einen Azimuthwinkel bezüglich eines (dreidimensionalen) Sensorbezugssystems eines Sensors umfasst. Die Messdatensätze können mit einem oder mehreren Sensoren erfasst sein, wobei jeder Sensor ein Sensorbezugssystem besitzt, auf das sich die in den Messdatensätzen umfassten Messergebnisse beziehen. Die Messdatensätze betreffen jeweils ein von den Sensoren erfasstes Objekt, d.h. jeder Messdatensatz zu einem Objekt umfasst einen Messzeitpunkt und eine Dopplergeschwindigkeit und einen Azimuthwinkel bezüglich eines Sensorbezugssystems des Sensors, der das Objekt erfasst. Die Messdatensätze können auf geeignete Weise bereitgestellt werden. Bevorzugt umfasst das Verfahren einen entsprechenden Bereitstellungsschritt.

Allgemein können für die Erfindung Messdatensätze von Sensoren verwendet werden, die eine Dopplergeschwindigkeit von Objekten bestimmen, d.h. die eine radiale Geschwindigkeit auf den Sensor zu bzw. von diesem weg bestimmen. Man kann sie daher auch als Doppler-Sensoren bezeichnen. Bevorzugt handelt es sich bei den Sensoren um Radarsensoren und/oder Lidarsensoren. Insbesondere ist die Verwendung von FMCW-Radarsensoren und/oder FMCW-Lidarsensoren vorgesehen (Radar: 'Radio Detection and Ranging'; Lidar: 'Light Detection and Ranging' bzw. 'Light Imaging, Detection and Ranging'; FMCW: 'Frequency Modulated Continuous Wave', auf Deutsch etwa 'frequenzmodulierte Dauerstrich-Detektion'). Die Messdatensätzen sind entsprechend vorzugsweise Radar-Messdatensätze und/oder Lidar-Messdatensätze.

Bevorzugt umfassen ein oder mehrere (insbesondere alle) der Messdatensätze einen Höhenwinkel (bezüglich des Sensorbezugssystems des jeweiligen Sensors). Durch Berücksichtigung des Höhenwinkels kann die Genauigkeit der Bestimmung des Bewegungszustands erheblich erhöht werden. Weiter bevorzugt ist vorgesehen, zumindest einige dieser ein oder mehreren (insbesondere alle) Messdatensätze aus Messergebnissen zu bestimmen, die lediglich den Messzeitpunkt, die Dopplergeschwindigkeit und den Azimuthwinkel umfassen, wobei der Höhenwinkel gleich einem vorbestimmten Wert, insbesondere gleich Null, gesetzt wird. Ältere Radarsensoren bzw. Lidarsensoren messen bzw.

bestimmen oftmals keinen Höhenwinkel. Die entsprechenden Messergebnisse umfassen also zunächst nur die Dopplergeschwindigkeit und den Azimuthwinkel. Um sowohl Messergebnisse mit als auch ohne Höhenwinkel verwenden zu können, wird davon ausgegangen, dass der Höhenwinkel einen vorbestimmten Wert, vorzugsweise Null, hat (der vorbestimmte Wert ist sensorbezogen, d.h. für verschiedene Messergebnisse desselben Sensors gleich). Indem der Höhenwinkel auf Null, bzw. allgemeiner auf einen vorbestimmten Wert, gesetzt wird, ist eine einheitliche Behandlung möglich. In der weiteren Beschreibung wird der Einfachheit halber lediglich auf den Fall eingegangen, dass die Sensoren den Höhenwinkel erfassen. Falls die Sensoren dies nicht tun, soll, wie vorstehend ausgeführt, der Höhenwinkel gleich dem vorbestimmten Wert bzw. gleich Null sein, ohne dass dies gesondert erwähnt wird. Selbstverständlich können Messdatensätze, die aus Messergebnissen gewonnen wurden, in denen der Höhenwinkel auf den vorbestimmten Wert gesetzt wurde, gemeinsam mit Messdatensätzen, in denen der Höhenwinkel bereits von vornherein enthalten ist, verwendet werden. Es ist auch möglich, Höhenwinkel, selbst wenn sie gemessen werden, gleich dem vorbestimmten Wert, insbesondere gleich Null, zu setzen, z.B. um eine Vereinfachung der in der Regressionsanalyse verwendeten Gleichungen und damit eine kürzere Berechnungszeit zu erreichen.

Das Verfahren umfasst ferner ein Bestimmen des Bewegungszustands des Körpers relativ zu der Umgebung als ein Geschwindigkeitsvektor und ein Winkelgeschwindigkeitsvektor in einem Körperbezugssystem, wobei jedes Sensorbezugssystem durch eine nichtsinguläre Transformation in das Körperbezugssystem umrechenbar (d.h. abbildbar) ist.

Der Begriff 'Geschwindigkeitsvektor' bezieht sich auf die lineare Geschwindigkeit (im Unterschied zur Winkelgeschwindigkeit) und wird im Rahmen dieser Beschreibung auch als Linear-Geschwindigkeitsvektor bezeichnet. Der Linear-Geschwindigkeitsvektor und der Winkelgeschwindigkeitsvektor sind im dreidimensionalen Körperbezugssystem angegeben. Da sie basierend auf (Doppler-)Messungen zu Objekten in der Umgebung berechnet werden, geben sie eine Geschwindigkeit relativ zu den Objekten an. Die (stationären) Objekte definieren im Prinzip wiederum ein Umgebungsbezugssystem, so dass der Linear-Geschwindigkeitsvektor und der Winkelgeschwindigkeitsvektor den Bewegungszustand (dargestellt im Körperbezugssystem) relativ zur Umgebung bzw. zum Umgebungsbezugssystem angeben.

Dadurch, dass die (dreidimensionalen) Sensorbezugssysteme mit dem (dreidimensionalen) Körperbezugssystem durch jeweilige (eines für jedes Sensorbezugssystem bzw. jeden Sensor) nicht-singuläre Transformationen (also insbesondere auch umkehrbar) verbunden sind bzw. ineinander abbildbar sind, wird sichergestellt, dass die relative Orientierung und Lage der Sensoren (engl.: 'Sensorpose') bei der Bestimmung des Bewegungszustand berücksichtigt wird. Etwa würden bei einer Projektion der per se dreidimensionalen Messdaten in eine Ebene Informationen verloren gehen und die Genauigkeit der Bestimmung des Bewegungszustands verringert. Die Sensorbezugssysteme und das Körperbezugssystem weisen jeweils drei Dimensionen auf. Entsprechend weisen auch der Geschwindigkeitsvektor und der Winkelgeschwindigkeitsvektor je drei Dimensionen bzw. Komponenten auf. Es handelt sich also um einen Bewegungszustand im dreidimensionalen Raum, der durch 3 + 3 = 6 Komponenten bestimmt ist.

Beim Bestimmen des Bewegungszustands wird wenigstens eine Bedingungsmenge gebildet, die mehrere Messdatensätze umfasst, wobei in einer Regressionsanalyse für die wenigstens eine Bedingungsmenge ein Funktional, das von Dopplergeschwindigkeits-Abweichungen zwischen geschätzten Dopplergeschwindigkeiten und den Dopplergeschwindigkeiten der in der wenigstens einen Bedingungsmenge umfassten Messdatensätze abhängig ist, minimiert wird, wobei die geschätzten Dopplergeschwindigkeiten in die Regressionsanalyse als abhängige Variablen eingehen bzw. dargestellt werden (die von dem Azimuthwinkel und gegebenenfalls dem Höhenwinkel des jeweiligen Messdatensatzes abhängig sind), wobei wenigstens eine Komponente des Geschwindigkeitsvektors und/oder Winkelgeschwindigkeitsvektors durch die Regressionsanalyse bestimmt wird. Die abhängige Variablen darstellenden Dopplergeschwindigkeiten werden jeweils durch eine Abbildung, die von dem Azimuthwinkel und gegebenenfalls dem Höhenwinkel des jeweiligen Messdatensatzes und der jeweiligen Transformation zwischen Sensor- und Körperbezugssystem abhängig ist, mit dem Geschwindigkeitsvektor und dem Winkelgeschwindigkeitsvektor in Beziehung gesetzt.

Der Bewegungszustand des Körpers, d.h. der Geschwindigkeitsvektor und der Winkelgeschwindigkeitsvektor bzw. zumindest eine Komponente davon, werden in Rahmen der Regressionsanalyse berechnet. Die geschätzten Dopplergeschwindigkeiten sind vom Azimuthwinkel und gegebenenfalls Höhenwinkel des jeweiligen Messdatensatzes abhängig, wobei dies nicht so zu verstehen ist, das Azimuth- und Höhenwinkel in der Regressionsanalyse unabhängige Variablen sein müssen. Insbesondere können die geschätzten Dopplergeschwindigkeiten in einem in der Regressionsanalyse eingeschlossenen Regressionsverfahren bzw. einer eingeschlossenen Regression durch Gleichungen als Funktion des Azimuth- und Höhenwinkels des jeweiligen Messdatensatzes und als Funktion der in dem Regressionsverfahren bzw. der Regression zu bestimmenden Geschwindigkeiten, d.h. dem Geschwindigkeitsvektor und dem Winkelgeschwindigkeitsvektor bzw. den Geschwindigkeitsvektoren der Sensoren, siehe die Gleichungssysteme (2), (5) weiter unten, dargestellt werden. Die zu bestimmenden Geschwindigkeiten stellen, wenn das Regressionsverfahren bzw. die Regression als Optimierungsproblem oder Variationsproblem aufgefasst wird, die zu variierenden Größen dar.

Bevorzugt werden alle (insgesamt sechs) Komponenten des Geschwindigkeitsvektors und/oder Winkelgeschwindigkeitsvektors durch die Regressionsanalyse bestimmt (stellen also zu variierende Größen dar). Es ist allerdings auch möglich, dass eine oder mehrere Komponenten im Sinne einer Einschränkung festgelegt sind (etwa kann bei einem Schienenfahrzeug festgelegt sein, dass keine Querbewegung stattfinden kann) oder durch ein von den Sensoren unabhängiges Messergebnis vorgegeben sind (etwa von einem Drehratensensor). In diesem Fall können die entsprechenden Komponenten durch die Einschränkung bzw. das unabhängige Messergebnis bestimmt sein und in der Regressionsanalyse nicht als zu variierende Größen verwendet werden. Vorzugsweise werden allerdings auch Komponenten, für die eine Einschränkung bzw. ein unabhängiges Messergebnis vorliegt, in der Regressionsanalyse berücksichtigt, also variiert, wobei zusätzliche Bedingungen, die der Einschränkung bzw. dem unabhängigen Messergebnis entsprechen, eingeschlossen werden. Diese zusätzlichen Bedingungen werden mit einem Gewicht relativ zu den Messdatensätzen versehen, das ausdrückt, wie stark die Einschränkung bzw. das unabhängige Messergebnis berücksichtigt werden soll.

Der Begriff 'Bedingungen' soll sich darauf beziehen, dass diese im Sinne der Regressionsanalyse, d.h. im Sinne des Funktionals, möglichst gut erfüllt werden sollen. 'Bedingungen' stellen also keine absoluten Bedingungen dar, die unbedingt genau erfüllt werden müssen.

Vorzugsweise sind der eine oder die mehreren Sensoren am Körper angebracht, so dass sie die Umgebung des Körpers erfassen. Bevorzugt werden die Messdatensätze mittels des einen oder der mehreren an dem Körper angebrachten Sensoren, die die Umgebung des Körpers erfassen, erfasst. Das Verfahren umfasst bevorzugt ein Durchführen von Messungen mittels des einen oder der mehreren Sensoren, um die Messdatensätze zu erfassen. Ein Erfassen der Messdatensätze entsprechend dieser Ausführungen kann zumindest als Teil eines Bereitstellungsschritts angesehen werden, der bevorzugt im Verfahren eingeschlossen ist.

Bevorzugt umfassen die Messdatensätze wenigstens zwei Messdatensätze desselben Sensors mit verschiedenen Messzeitpunkten. Die Erfassung mehrerer Messdatensätze mit verschiedenen Messzeitpunkten ermöglicht eine genauere Bestimmung des Bewegungszustands und im Besonderen auch die Bestimmungen des Bewegungszustands für verschiedene (Bestimmungs-)Zeitpunkte.

Bevorzugt sind die Messzeitpunkte von Messdatensätzen mindestens zweier unterschiedlicher Sensoren voneinander verschieden. Auf diese Weise kann vermieden werden, dass es zu Interferenzen zwischen verschiedenen Sensoren kommt, was zu unzuverlässigen Messdatensätzen führen würde.

Bevorzugt wird an einem Berechnungszeitpunkt der Bewegungszustand für einen Bestimmungszeitpunkt bestimmt; wobei die wenigstens eine Bedingungsmenge aus den Messdatensätzen gebildet wird, deren Messzeitpunkte innerhalb eines Bestimmungszeitraums, in welchem zweckmäßigerweise auch der Bestimmungszeitpunkt liegt, liegen. Dadurch wird ermöglicht, für die Bestimmung des Bewegungszustands nur bestimmte Messdatensätze zu berücksichtigen, deren Messzeitpunkt etwa in zeitlicher Nähe zum Bestimmungszeitpunkt liegt. Messdatensätze mit Messzeitpunkten außerhalb des Bestimmungszeitraums werden nicht in die Bedingungsmenge aufgenommen. Z.B. kann so verhindert werden, dass zeitlich weit entfernte Messdatensätze, während derer noch ein anderer Bewegungszustand vorlag, berücksichtigt werden.

Unter dem Begriff 'Berechnungszeitpunkt' ist der Zeitpunkt zu verstehen, an dem die jeweiligen Daten (Messdatensätze) bestimmt bzw. ausgewählt werden, basierend auf denen die Bestimmung des Bewegungszustands durchgeführt wird. Es können bei der jeweiligen Bestimmung des Bewegungszustands nur Messdatensätze berücksichtigt werden (d.h. in die jeweilige Bedingungsmenge aufgenommen werden), die einen Messzeitpunkt aufweisen, der vor dem Berechnungszeitpunkt liegt oder gleich dem Berechnungszeitpunkt ist. Die Berechnung selbst dauert klarerweise einen Berechnungszeitraum (dessen Länge von der zur Verfügung stehenden Rechenleistung abhängig ist). Der Berechnungszeitpunkt kann als Anfangszeitpunkt der Berechnung bzw. des Berechnungszeitraums angesehen werden.

Vorzugsweise werden in dem Funktional die Dopplergeschwindigkeits-Abweichungen mit einem positiven Zeitgewicht multipliziert, das eine Funktion der Zeitdifferenz zwischen dem Messzeitpunkt des jeweiligen Messdatensatzes und dem Bestimmungszeitpunkt, für den der Bewegungszustand bestimmt wird, ist. Weiter bevorzugt nimmt das Zeitgewicht mit zunehmendem Betrag der Zeitdifferenz ab. Auf diese Weise können, bei entsprechender Wahl der Gewichte, Messdatensätze, die zeitlich nahe beim Bestimmungszeitpunkt liegen und somit den zu bestimmenden Bewegungszustand besser charakterisieren, stärker in der Regressionsanalyse berücksichtigt werden als zeitlich weiter entfernt liegende Messdatensätze.

Bevorzugt wird der Bewegungszustand für mehrere aufeinanderfolgende Bestimmungszeitpunkte bestimmt, wobei jeder Bestimmungszeitraum der mehreren aufeinanderfolgenden Bestimmungszeitpunkte eine untere zeitliche Grenze und eine obere zeitliche Grenze aufweist, wobei die untere zeitliche Grenze gleich einem vorherigen Bestimmungszeitpunkt der mehreren aufeinanderfolgenden Bestimmungszeitpunkte ist und die obere zeitliche Grenze gleich einem nachfolgenden Bestimmungszeitpunkt der mehreren aufeinanderfolgenden Bestimmungszeitpunkte oder dem jeweiligen Berechnungszeitpunkt ist. Bei mehreren aufeinanderfolgenden Bestimmungszeitpunkten werden somit, um eine hohe Genauigkeit zu erreichen, nur die Messdatensätze berücksichtigt, die klar dem Bestimmungszeitpunkt zugeordnet sind bzw. sich nicht jenseits eines vorherigen oder nachfolgenden Bestimmungszeitpunktes befinden.

Weiterhin erfolgen bevorzugt eine erste Bestimmung des Bewegungszustands für den Bestimmungszeitpunkt basierend auf einem ersten Bestimmungszeitraum und eine zweite Bestimmung des Bewegungszustands für den Bestimmungszeitpunkt basierend auf einem zweiten Bestimmungszeitraum; wobei der zweite Bestimmungszeitraum verschieden vom ersten Bestimmungszeitraum ist und wenigstens einen Messzeitpunkt umfasst, der im ersten Bestimmungszeitraum nicht umfasst ist. Weiter bevorzugt erfolgt die erste Bestimmung an einem ersten Berechnungszeitpunkt und die zweite Bestimmung an einem späteren zweiten Berechnungszeitpunkt, wobei eine obere zeitliche Grenze des zweiten Bestimmungszeitraums zeitlich nach dem ersten Berechnungszeitpunkt liegt. So wird eine mehrmalige Bestimmung des Bewegungszustands für denselben Bestimmungszeitpunkt, wenn neue Messdatensätze vorliegen, ermöglicht. Die erste Bestimmung kann als erste Abschätzung angesehen werden, die zu einem frühen Zeitpunkt erfolgt und die, wenn neue Messdatensätze vorliegen, zu einem späteren zweiten Berechnungszeitpunkt verbessert wird, um eine verbesserte Abschätzung, nämlich die zweite Bestimmung, zu erhalten.

In einem nicht beanspruchten Beispiel werden in der Regressionsanalyse die geschätzten Dopplergeschwindigkeiten weiterhin unter Verwendung der Transformation zwischen dem jeweiligen Sensorbezugssystem und dem Körperbezugssystem als von dem Geschwindigkeitsvektor und dem Winkelgeschwindigkeitsvektor abhängig dargestellt, und der Geschwindigkeitsvektor und der Winkelgeschwindigkeitsvektor werden so bestimmt, dass das Funktional minimiert wird. Durch diese Vorgehensweise werden alle Messdatensätze in der Regressionsanalyse gleichzeitig berücksichtigt, was zu einer hohen Genauigkeit führt.

Erfindungsgemäß werden mehrere Bedingungsmengen gebildet, die jeweils Messdatensätze nur eines einzelnen Sensors umfassen. Mehrere Sensor-Geschwindigkeitsvektoren werden in dem jeweiligen Sensorbezugssystem bestimmt, indem für jede der Bedingungsmengen in der Regressionsanalyse die geschätzten Dopplergeschwindigkeiten weiterhin als von dem Sensor-Geschwindigkeitsvektor abhängig dargestellt werden, und der Sensor-Geschwindigkeitsvektor wird so bestimmt, dass das jeweilige Funktional minimiert wird. In einer Regression werden der Geschwindigkeitsvektor und der Winkelgeschwindigkeitsvektor bzw. eine oder mehrere Komponenten davon so bestimmt, dass ein Regressions-Funktional, das von Sensor-Abweichungen zwischen den Sensor-Geschwindigkeitsvektoren und geschätzten Sensor-Geschwindigkeitsvektoren abhängig ist, minimiert wird, wobei die Sensor-Geschwindigkeitsvektoren unter Verwendung der Transformation zwischen dem Körperbezugssystem und dem jeweiligen Sensorbezugssystem als von dem Geschwindigkeitsvektor und dem Winkelgeschwindigkeitsvektor abhängig dargestellt werden. Durch diese Vorgehensweise werden zunächst die Geschwindigkeitsvektoren der Sensoren bestimmt und basierend darauf dann der Bewegungszustand des Körpers bestimmt. Dieses zweistufige Vorgehen ist mit relativ wenig Rechenaufwand verbunden, da die zu erfüllenden Gleichungssysteme bzw. Bedingungsmengen relativ klein sind.

Vorzugsweise umfasst jede der Bedingungsmengen nur Messdatensätze, die den gleichen Messzeitpunkt aufweisen; wobei gegebenenfalls in dem Regressions-Funktional die Sensor-Abweichungen jeweils mit einem Gewicht multipliziert werden, das eine Funktion der Zeitdifferenz zwischen dem Messzeitpunkt der jeweiligen Bedingungsmenge und dem Bestimmungszeitpunkt, für den der Bewegungszustand bestimmt wird, ist. Dies ermöglicht die Berücksichtigung unterschiedlicher Messzeitpunkte.

Bevorzugt umfassen die Bedingungsmengen wenigstens eine Komponenteneinschränkung an wenigstens eine Komponente des Geschwindigkeitsvektors und/oder des Winkelgeschwindigkeitsvektors in Form wenigstens eines Komponentenvorgabewerts. Das Funktional bzw. gegebenenfalls das Regressions-Funktional ist weiterhin von einer Komponenten-Abweichung zwischen dem wenigstens eines Komponentenvorgabewert und wenigstens einem geschätzten Komponentenvorgabewert abhängig. Die Komponenteneinschränkungen stellen von den Messdatensätzen unabhängige Bedingungen dar, so dass sie von Fehlern bzw. Ungenauigkeiten, die eine Vielzahl von Messdatensätze betreffen, nicht beeinträchtigt werden und so zu einer Verbesserung der Genauigkeit der Bestimmung des Bewegungszustands beitragen.

Vorzugsweise wird wenigstens eine Winkelgeschwindigkeitskomponente im Körperbezugssystem als Komponentenvorgabewert verwendet, die insbesondere durch einen Drehratensensor bestimmt wird; wobei weiter bevorzugt gegebenenfalls in dem Funktional bzw. dem Regressions-Funktional die wenigstens eine Komponenten-Abweichung mit einem Gewicht multipliziert wird, das eine Funktion der Zeitdifferenz zwischen dem Messzeitpunkt des Drehratensensors und dem Bestimmungszeitpunkt, für den der Bewegungszustand bestimmt wird, ist. Drehratensensoren weisen typischerweise eine relativ hohe Messgenauigkeit auf, so dass durch Einbeziehen von entsprechend bestimmten bzw. gemessenen Winkelgeschwindigkeitskomponenten eine genaue Bestimmung des Bewegungszustands verbessert werden kann.

Bevorzugt umfassen die Messdatensätze wenigstens einen Zusatzparameter ausgewählt aus einer Entfernung des erfassten Objekts, einer Varianz der Entfernung, einer Varianz des Azimuthwinkels, einer Varianz des Höhenwinkels, einer Varianz der Dopplergeschwindigkeit, einer Signalstärke des empfangenen Signals, einem Querschnitt (d.h. einen effektiven Querschnitt eines Objekts), insbesondere einen Radarquerschnitt oder Lidarquerschnitt, jeweils bezogen auf das erfasste Objekt des jeweiligen Messdatensatzes, und einem Typ des Sensors, und gegebenenfalls einer Anordnung des Sensors am Körper. Die Dopplergeschwindigkeits-Abweichungen werden mit einem Zusatzgewicht multipliziert, das eine Funktion des jeweiligen Zusatzparameters ist. Alternativ oder zusätzlich wird ein Messdatensatz verworfen, wenn der wenigstens eine Zusatzparameter außerhalb wenigstens eines vorbestimmten Bereichs liegt. Auf diese Weise können Messdatensätze, bei denen anhand der Zusatzparameter von einer hohen Verlässlichkeit ausgegangen werden kann, stärker berücksichtigt werden. Ebenso können unzuverlässige Messdatensätze weniger stark oder gar nicht berücksichtigt werden. So kann eine höhere Genauigkeit der Bestimmung des Bewegungszustands des Körpers erreicht werden.

Bevorzugt erfolgt die Regressionsanalyse unter Verwendung eines sog. Fehler-in-den-Variablen-Regressionsverfahrens, wobei die Azimuthwinkel und/oder gegebenenfalls die Höhenwinkel optimiert werden. Dies ermöglicht eine weitere Erhöhung der Genauigkeit der Bestimmung des Bewegungszustands des Körpers.

Bevorzugt erfolgt die Regressionsanalyse unter Verwendung eines iterativneugewichteten-kleinsten-Quadrat-Verfahrens. Eine ungenaue Bestimmung des Bewegungszustands bedingt durch Ausreißer in den Messdatensätzen, insbesondere solche von dynamischen, nicht statischen Objekten in der Umgebung, kann so vermieden werden.

Ein erfindungsgemäßes Verfahren zur Bestimmung einer relativen Position und/oder einer relativen Orientierung eines starren Körpers umfasst ein Bestimmen mehrerer Bewegungszustände des Körpers für mehrere aufeinander folgende Bestimmungszeitpunkte gemäß der Erfindung und ein Integrieren der Bewegungszustände über die Zeit zwischen einem Anfangs-Bestimmungszeitpunkt der mehreren Bestimmungszeitpunkte und einem End-Bestimmungszeitpunkt der mehreren Bestimmungszeitpunkte, um die relative Position und/oder die relative Orientierung als Ergebnisse dieser Integration zu erhalten.

Eine erfindungsgemäße Recheneinheit, z.B. ein Steuergerät eines Kraftfahrzeugs oder Roboters, ist, insbesondere programmtechnisch, dazu eingerichtet, eine Vielzahl von Messdatensätzen zu erhalten und ein erfindungsgemäßes Verfahren mit den vorstehenden Aspekten durchzuführen.

Ein erfindungsgemäßes Fahrzeug und/oder ein erfindungsgemäßer Roboter, insbesondere ein Land-, Luft- oder Wasserfahrzeug und/oder ein Land-, Luft- oder Wasserroboter, weist eine erfindungsgemäße Recheneinheit und einen oder mehrere an einem Körper des Fahrzeugs und/oder Roboters angebrachte Sensoren, die eine Umgebung des Körpers erfassen und die dazu eingerichtet sind, Messungen zu Objekten in der Umgebung durchzuführen und dabei erfasste Messdatensätze an die Recheneinheit zu senden, auf. Bevorzugt sind die Sensoren Radarsensoren und/oder Lidarsensoren.

Auch die Implementierung eines erfindungsgemäßen Verfahrens in Form eines Computerprogramms oder Computerprogrammprodukts mit Programmcode zur Durchführung aller Verfahrensschritte, insbesondere derjenigen, die die Regressionsanalyse und das Bilden der Bedingungsmenge betreffen, ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1 zeigt eine Draufsicht eines Fahrzeugs dar, an dem Sensoren angebracht sind;

Figur 2 zeigt ein Bezugssystem eines Sensors, der ein Objekt erfasst;

Figur 3 zeigt ein Diagramm mit mehreren Bestimmungs- und Messzeitpunkten; und

Figur 4 zeigt ein Ablaufdiagramm gemäß einer bevorzugten Ausführungsform der Erfindung.

Ausführungsform(en) der Erfindung

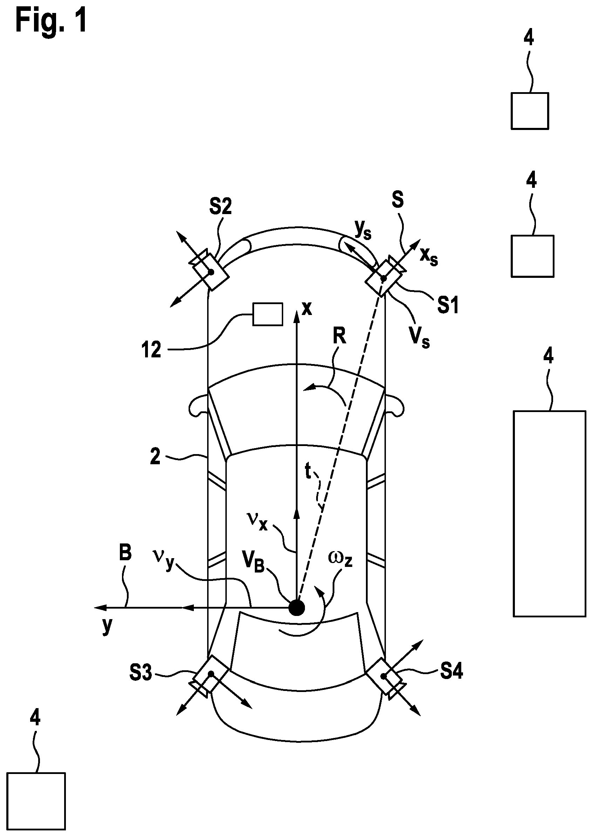

Figur 1 stellt als Beispiel für einen starren Körper in einer Draufsicht ein Kraftfahrzeug 2 dar, an dem Sensoren S1, S2, S3, S4 angebracht sind (z.B. Radarsensoren und/oder Lidarsensoren). Auch andere Fahrzeuge, z.B. Luftfahrzeuge und Wasserfahrzeuge, sind als starre Körper denkbar. Ebenso sind Roboter möglich. Insbesondere kann das Fahrzeug automatisiert sein (Roboterfahrzeug). Allgemein kann die Erfindung auch bei nicht selbsttätig angetriebenen starren Körpern angewendet werden. Das Kraftfahrzeug (allgemeiner der Körper) definiert ein Körperbezugssystem B mit drei zueinander orthogonalen Achsen, d.h. mit einer x-Achse, einer y-Achse und einer z-Achse, die sich in der Draufsicht senkrecht zur Zeichenebene aus dieser erstreckt. Der Ursprung $U_B$ des Körperbezugssystems B wird für ein Kraftfahrzeug bzw. für ein Fahrzeug vorzugsweise in dem Drehzentrum des Fahrzeugs platziert. Bei einem Kraftfahrzeug mit Ackermann-Lenkung ist dies die Mitte der Hinterachse, wie gezeigt.

Der starre Körper, d.h. das Kraftfahrzeug 2, bewegt sich in einer Umgebung, in der sich Objekte 4, z.B. Bäume, Gebäude, andere Kraftfahrzeuge, befinden. Dabei können statische Objekte, d.h. sich in der Umgebung nicht bewegende Objekte, und sich bewegende Objekte vorhanden sein. Die statischen Objekte befinden sich an festen Positionen in der Umgebung bzw. in einem Umgebungsbezugssystem.

Der Körper (Kraftfahrzeug 2) bewegt sich in der Umgebung. Diese Bewegung, d.h. der Bewegungszustand des Körpers in dem Umgebungsbezugssystem ist im Körperbezugssystem B durch einen linearen Geschwindigkeitsvektor (Vx, Vy, Vz) und einen Winkelgeschwindigkeitsvektor (ωx, ωy, ωz) darstellbar, wobei die Komponenten des Geschwindigkeitsvektors die Geschwindigkeiten des Körpers in dem Umgebungsbezugssystem, aber entlang der jeweiligen Achsen x, y, z des Körperbezugssystems darstellen und die Komponenten des Winkelgeschwindigkeitsvektors die Winkelgeschwindigkeiten des Körpers in dem Umgebungsbezugssystem, aber um die jeweiligen Achsen x, y, z des Körperbezugssystems darstellen. In der Ansicht der Figur 1 sind nur Vx, Vy und ωz eingezeichnet.

An bestimmten Positionen am Körper, hier an den vier Ecken des Kraftfahrzeugs 2, sind die Sensoren S1, S2, S3, S4 angebracht. Auch eine andere Anzahl von Sensoren ist möglich, bevorzugt liegt die Anzahl der Sensoren im Bereich von 1 bis 10, weiter bevorzugt im Bereich von 3 bis 6. Anders als dargestellt können Sensoren nicht nur an Ecken angebracht sein, sondern auch an beliebigen anderen Stellen des starren Körpers.

Jeder der Sensoren definiert ein Sensorbezugssystem. Stellvertretend ist in Figur 1 für einen der Sensoren S1 ein Sensorbezugssystem S eingezeichnet, das zueinander orthogonale Achsen, d.h. eine x-Achse $x_S$, eine y-Achse $y_S$ und eine z-Achse $z_S$, aufweist. Die z-Achse ist in der Draufsicht nicht eingezeichnet und kann sich, muss sich aber nicht, senkrecht zur Zeichenebene bzw. parallel zur z-Achse des Körperbezugssystems erstrecken.

Das Sensorbezugssystem jedes der Sensoren ist mittels einer linearen Transformation mit dem Körperbezugssystem verbunden, d.h. durch die Transformation in dieses abbildbar. Vektoren/Koordinaten in jedem der Sensorbezugssysteme können also durch die jeweilige Transformation in entsprechende Vektoren/Koordinaten im Körperbezugssystem abgebildet werden. Die Transformation für jedes der Sensorbezugssysteme ist jeweils durch Kombination einer Translation t (charakterisiert durch einen dreidimensionalen Translationsvektor zwischen dem Ursprung $U_B$ des Körperbezugssystems und einem Ursprung $U_S$ des Sensorbezugssystems) und einer Rotation R (etwa charakterisiert durch Eulerwinkel) gegeben (wieder stellvertretend für einen der Sensoren eingezeichnet). Es handelt sich also um eine Transformation zwischen zwei dreidimensionalen Räumen. Diese sollte nicht-singulär sein.

Weiterhin umfasst das Fahrzeug der Figur 1 bevorzugt eine Recheneinheit 12 (z.B. ein Steuergerät), die dazu eingerichtet ist, von den Sensoren Messdatensätze zu erhalten und basierend darauf einen Bewegungszustand zu bestimmen, wobei die Recheneinheit dazu eingerichtet ist, eine Regressionsanalyse, insbesondere wie nachfolgend genauer beschrieben, durchzuführen.

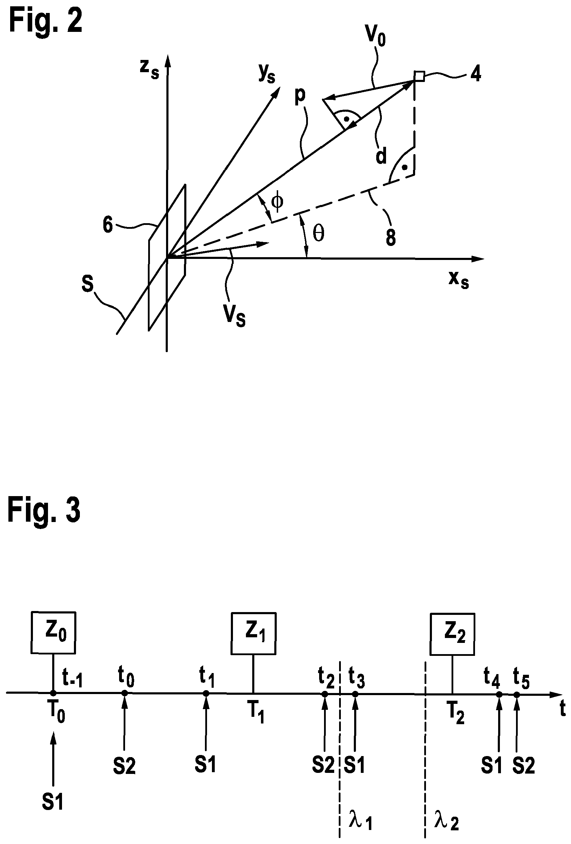

Figur 2 stellt ein Bezugssystem S eines Sensors (eines Radarsensors und/oder eines Lidarsensores), d.h. ein Sensorbezugssystem, dar, der ein Objekt 4 erfasst. Das Sensorbezugssystem S weist eine x-Achse $x_S$, eine y-Achse $y_S$ und eine z-Achse $z_S$ auf, die zueinander orthogonal sind. Eine schematisch gezeichnete Sensorfläche 6 des Sensor ist hier beispielhaft in der y-z-Ebene angeordnet und erfasst als Sichtfeld den Halbraum mit Koordinaten $x_S > 0$. Selbstverständlich können die Sensoren auch ein anderes Sichtfeld aufweisen (als einen Halbraum). Der Sensor ist bzw. für die Erfindung verwendeten Sensoren sind dazu eingerichtet, unter Ausnutzung des Dopplereffekts eine als Dopplergeschwindigkeit bezeichnete Geschwindigkeit eines erfassten Objekts auf den Sensor zu bzw. vom Sensor weg zu bestimmen, d.h. es werden Doppler-Sensoren verwendet. Bevorzugt handelt es sich bei den Sensoren um Radarsensoren bzw. Dopplerradar-Sensoren und/oder Lidar-Sensoren.

Die Position des Objekts 4 ist durch einen Objekt-PositionsvektorP, der sich vom Ursprung $U_S$ des Sensorbezugssystems zum Objekt 4 erstreckt gegeben. Dieser kann im Sensorbezugssystem durch Kugelkoordinaten (θ, φ, r) angeben werden.

Der Radius $r = |P|_2$ ist die Länge des Objekt-Positionsvektors **P**, d.h. der Abstand zwischen dem Ursprungs $U_S$ und dem Objekt 4. Der Azimuthwinkel θ ist der Winkel zwischen der x-Achse $x_S$ und der Projektion 8 des Objekt-Positionsvektor **P** in die x-y-Ebene. Der Höhenwinkel φ ist der Winkel zwischen der x-y-Ebene und dem Objekt-Positionsvektor **P**. Entsprechend gilt:

$$P = (x_S, y_S, z_S) = (r \cos\theta \cos\phi, r \sin\theta \cos\phi, r \sin\phi)$$

Das Objekt 4 weist eine Geschwindigkeit, charakterisiert durch einen Objekt-Geschwindigkeitsvektor $V_O$, relativ zum Sensor bzw. im Sensorbezugssystem auf. Die Geschwindigkeit des Sensors relativ zum Objekt ist entsprechend durch $V_S = -V_O$ gegeben. Die Dopplergeschwindigkeit d ist durch die Länge der Projektion des Objekt-Geschwindigkeitsvektors $V_O$ auf den Objekt-Positionsvektor P. Diese Länge ist gleich dem Skalarprodukt $d = p^0 \cdot V_O$ zwischen dem Objekt-Geschwindigkeitsvektors $V_O$ und einem Einheitsvektor $p^0$ in Richtung Objekt-Positionsvektor P, wobei $p^0 = P/r$ ist. Insgesamt kann somit die Dopplergeschwindigkeit d durch den Geschwindigkeitsvektor $V_S = (V_{Sx}, V_{Sy}, V_{Sz})$ des Sensors relativ zum Objekt ausgedrückt werden:

$$-d = (\cos\theta\cos\phi, \sin\theta\cos\phi, \sin\phi)\begin{pmatrix} V_{Sx} \\ V_{Sy} \\ V_{Sz} \end{pmatrix}$$

$$= V_{Sx}\cos\theta\cos\phi + V_{Sy}\sin\theta\cos\phi + V_{Sz}\sin\phi$$

Der Sensor erfasst an einem einzelnen Messzeitpunkt eine Vielzahl von Messdatensätzen (z.B. 50 bis 150 Messdatensätze), so dass mit jeder Messung des Sensors eine Vielzahl von Dopplergeschwindigkeiten und entsprechenden Azimuth- und Höhenwinkeln ermittelt wird. Die statischen Objekte definieren die Umgebung, relativ zu der die Geschwindigkeit des Sensors und weitergehend des starren Körpers mittels der gemessenen Dopplergeschwindigkeiten bestimmt werden kann.

Um die dabei relevanten Gleichungen trotz der hohen Anzahl von Messdatensätzen in übersichtlicher Form darstellen zu können, wird im Folgenden eine geeignete Notation eingeführt.

Vektoren, Matrizen und Skalare: Vektoren und Matrizen werden in Fettdruck dargestellt, zur einfacheren Unterscheidung von Skalaren.

Punkte im dreidimensionalen (3D) Raum: Ein Punkt p, der in kartesischen Koordinaten bezüglich eines Koordinatensystems bzw. Bezugssystems A ausgedrückt werden soll, wird als $_A\boldsymbol{p}$ geschrieben.

Vektoren zwischen zwei Punkten im 3D-Raum: Ein Translationsvektor zwischen zwei Punkten B und C bezüglich eines Bezugssystems A wird als $_A\boldsymbol{t}_{B,C}$ geschrieben.

Geschwindigkeiten von Bezugssystems im 3D-Raum: Wenn sich ein Bezugssystem C relativ zu einem Bezugssystem B mit einer bestimmten linearen oder Winkelgeschwindigkeit bewegt, wird die jeweilige Geschwindigkeit bezüglich des Bezugssystems A für lineare Geschwindigkeiten geschrieben als:

$$_A\boldsymbol{v}_{B,C}$$

und für Winkelgeschwindigkeiten geschrieben als:

$$_A\boldsymbol{\omega}_{B,C}$$

Drehungen und Transformationen des starren Körpers: Eine Transformation zwischen zwei Bezugssystem A und B wird geschrieben als:

$$\boldsymbol{T}_{A,B}$$

Eine solche Transformation transformiert im Bezugssystem B ausgedrückte Punkte in das Bezugssystem A:

$$\boldsymbol{T}_{A,B} \cdot {}_B\boldsymbol{p} = {}_A\boldsymbol{p}$$

Da Transformationen eine Drehung und eine Translation umfassen, kann dies auch geschrieben werden als:

$$\boldsymbol{R}_{A,B} \cdot {}_B\boldsymbol{p} + {}_A\boldsymbol{t}_{A,B} = {}_A\boldsymbol{p}$$

wobei $\boldsymbol{R}_{A,B}$ die entsprechende Dreh- bzw. Rotationsmatrix ist. $\boldsymbol{T}_{A,B}$ kann als Lage und Orientierung eines Bezugssystems relativ zum anderen angesehen werden; im Englischen auch als 'Pose' bezeichnet.

Das Bezugssystem des starren Körpers, d.h. das Körperbezugssystem, wird mit dem Buchstaben 'B' bezeichnet. Das Bezugssystem eines Sensors, d.h. ein Sensorbezugssystem, wird mit 'S', 'S1', 'S2', ..., 'Si', ..., 'SI' bezeichnet, wobei der Einfachheit halber auch die Sensoren selbst teilweise mit S, S1, S2, ..., Si, ..., SI bezeichnet werden. Das Bezugssystem der Umgebung wird mit dem Buchstaben 'W' bezeichnet.

In kartesischen Koordinaten bzw. Polarkoordinaten ausgedrückt ist unter Verwendung dieser Notation die Position eines Objekts im Bezugssystem Si eines Sensors:

$$_{Si}\boldsymbol{p}_j = (x,y,z)^T = r\,(\cos\theta\cos\phi, \sin\theta\cos\phi, \sin\phi)^T$$

wobei 'j' einen (der Vielzahl) Messdatensatz (z.B. Ergebnisse einer Radarmessung oder Lidarmessung) eines Objekts bezeichnet. Wenn sich ein Sensor Si mit einer Geschwindigkeit $_{Si}v_{W,Si}$ relativ zur Umgebung W bewegt, in der das Objekt ein statisches Objekt ist, gilt wie oben beschrieben die Gleichung (1):

$$d_j = -\left(_{Si}\boldsymbol{p}_j^0\right)^T {}_{Si}\boldsymbol{v}_{W,Si}$$

wobei

$$\boldsymbol{p}^0 = \frac{\boldsymbol{p}}{|\boldsymbol{p}|_2} = (\cos\theta\cos\phi, \sin\theta\cos\phi, \sin\phi)^T$$

die normalisierten Punkt-Koordinaten des Objekts sind, d.h. der Einheitsvektor in Richtung des Objekts ($|\cdot|_2$ bezeichnet die übliche 2-Norm, d.h. die Länge des Vektors).

Aus mehreren Messdatensätzen mehrerer Dopplergeschwindigkeiten $d_j$, mit j aus 1, 2, ..., J (J ist die Anzahl der verwendeten Messdatensätze, hier können an einem Messzeitpunkt mehrere Messdatensätze eines einzelnen Objekts und/oder Messdatensätze verschiedener Objekte umfasst sein), ergibt sich das folgende Gleichungssystem (2):

$$\begin{pmatrix} \cos\theta_1\cos\phi_1 & \sin\theta_1\cos\phi_1 & \sin\phi_1 \\ \vdots & \vdots & \vdots \\ \cos\theta_J\cos\phi_J & \sin\theta_J\cos\phi_J & \sin\phi_1 \end{pmatrix} \begin{pmatrix} _{Si}vx_{W,Si} \\ _{Si}vy_{W,Si} \\ _{Si}vz_{W,Si} \end{pmatrix} = \begin{pmatrix} -d_1 \\ \vdots \\ -d_J \end{pmatrix}$$

Falls Messdatensätze keinen Höhenwinkel $\phi$ umfassen, werden in diesem Gleichungssystem die entsprechenden Höhenwinkel $\phi_j$ gleich einem vorbestimmten Winkel angenommen bzw. gesetzt. Vorzugsweise werden diese Höhenwinkel gleich Null gesetzt ($\phi_j = 0$ für Messdatensätze j, für die kein Höhenwinkel vorliegt). Dies führt zu einer Vereinfachung des Gleichungssystems, da Kosinus und Sinus dieser Höhenwinkel entsprechend 1 bzw. 0 sind. In vereinfachter Schreibweise kann das Gleichungssystem (2) geschrieben werden als:

$$\begin{pmatrix} (\boldsymbol{p}_1^0)^T \\ \vdots \\ (\boldsymbol{p}_j^0)^T \end{pmatrix} {}_{Si}\boldsymbol{v}_{W,Si} = \begin{pmatrix} -d_1 \\ \vdots \\ -d_J \end{pmatrix}$$

$$\boldsymbol{A} \cdot {}_{Si}\boldsymbol{v}_{W,Si} = \boldsymbol{D}$$

wobei $\boldsymbol{A}$ und $\boldsymbol{D}$ als Bezeichnung für die jeweiligen Vektoren im Gleichungssystem verwendet wird; diese sind durch Messwerte der Sensoren gegeben.

$\boldsymbol{A}$ ergibt sich aus dem Azimuthwinkel $\theta$ und dem Höhenwinkel $\phi$ eines Messdatensatzes und $\boldsymbol{D}$ ergibt sich aus den entsprechenden gemessenen Dopplergeschwindigkeiten $d_i$.

Wenn also ein Vielzahl von Messdatensätzen eines Sensors Si vorhanden ist, kann durch Lösen dieser Gleichungen die Geschwindigkeit $_{Si}v_{W,Si}$ des Sensors geschätzt bzw. bestimmt werden, wobei die Gleichungen im Allgemeinen ein überbestimmtes Gleichungssystem bilden. Die Messdatensätze können als im Sinne des obigen Gleichungssystems zu erfüllende Bedingungen an die Sensor-geschwindigkeit angesehen werden. Die Menge von Messdatensätzen bzw. zumindest ein Teil davon stellt also eine Bedingungsmenge dar.

Das obige Gleichungssystem (1) kann mittels einer Regression gelöst werden, wobei die Sensor-Geschwindigkeit $_{Si}v_{W,Si}$ so bestimmt bzw. variiert wird, dass ein Fehlermaß, d.h. ein Regressionsfunktional F, minimiert wird, das von einer Differenz (Dopplergeschwindigkeits-Abweichung $(d_j-\hat{d}_j)$) zwischen den gemessenen Dopplergeschwindigkeiten $d_j$ und geschätzten Dopplergeschwindigkeiten $\hat{d}_j$, die durch die linke Seite des Gleichungssystems für eine jeweilige Sensor-Geschwindigkeit gegeben sind, abhängig ist. Beispielsweise könnte ein mittlerer quadratischer Fehler minimiert werden:

$$F = F[(d_1-\hat{d}_1), ..., (d_j-\hat{d}_j), ..., (d_J-\hat{d}_J)] \sim \sum_j (d_j-\hat{d}_j)^2$$

Selbstverständlich sind auch andere funktionale Abhängigkeiten als die quadratische möglich.

Zusätzlich können hier Gewichte $g_j$ vorgesehen sein, die von Zusatzparametern, die von dem Sensor bei einer Messung (z.B. Radarmessung oder Lidarmessung) zusätzlich erfasst werden, abhängig sind. Die Gewichte $g_j$ können auch als Parametergewichte bezeichnet werden. Im Funktional wird dann die Differenz zwischen den gemessenen Dopplergeschwindigkeiten $d_j$ und geschätzten Dopplergeschwindigkeiten $\hat{d}_j$ mit dem entsprechenden Gewicht $g_j$ multipliziert. Es ergibt sich:

$$F = F[\mathrm{g}_1(\mathrm{d}_1 - \hat{\mathrm{d}}_1), ..., \mathrm{g}_j(\mathrm{d}_j - \hat{\mathrm{d}}_j), ..., \mathrm{g}_J(\mathrm{d}_J - \hat{\mathrm{d}}_J)] \sim \sum_j \mathrm{g}_j^2 (\mathrm{d}_j - \hat{\mathrm{d}}_j)^2$$

Beispielsweise könnte ein Messdatensatz, in dem der Azimuth- und/oder Höhenwinkel eine hohe Unsicherheit bzw. Varianz aufweist, relativ zu Messdatensätzen, in denen ein geringe Varianz vorhanden ist, mit einem geringeren Gewicht versehen sein.

In Abhängigkeit von Zusatzparametern können auch einzelne Messdatensätze unberücksichtigt bleiben, d.h. nicht in das obige Gleichungssystem (2) eingeschlossen werden, beispielsweise wenn ein Abstand zu einem Objekt über einer vorgegebenen Schwelle liegt. Einen ähnlichen Effekt hat es, das entsprechend (Parameter-)Gewicht $g_j$ gleich Null zu setzen.

Im Allgemeinen werden die Messdatensätze fehlerbehaftet sein, insbesondere werden im Allgemeinen nicht alle erfassten Objekte statische Objekte sein, so dass in den Messdatensätzen Ausreißer vorhanden sein werden, die die Bestimmung der Sensorgeschwindigkeit verfälschen. Um diesen Effekt zu minimieren, wird vorzugsweise ein robustes Verfahren zur Regression verwendet. Insbesondere kann eine Methode der iterativ neugewichteten kleinsten Quadrate (IRLS, engl.: 'iteratively reweighted least squares') verwendet werden. Solche IRLS-Methoden sind dem Fachmann an sich bekannt.

Zur Bestimmung des linearen Geschwindigkeitsvektors $_B v_{W,B}$ und des Winkelgeschwindigkeitsvektors $_B \omega_{W,B}$ des starren Körpers wird die Geschwindigkeit des Sensors mit den (Linear- und Winkel-) Geschwindigkeitsvektoren des Körpers in Beziehung gesetzt, wobei die relative Drehung $R_{B,Si}$ und Translation $_B t_{B,Si}$ der fest am Körper angebrachten Sensoren verwendet wird, Gleichung (3):

$$_{Si} v_{W,Si} = R_{Si,B} \big( _B v_{W,B} + {_B \omega_{W,B}} \times {_B t_{B,Si}} \big)$$

Hier bezeichnet 'x' das übliche Kreuzprodukt zweier dreidimensionaler Vektoren.

Unter Verwendung der Schreibweise

$$\lfloor a \rfloor_\times = \begin{pmatrix} 0 & -a_z & a_y \\ a_z & 0 & -a_x \\ -a_y & a_x & 0 \end{pmatrix}$$

kann diese Gleichung wie folgt geschrieben werden:

$$_{Si} v_{W,Si} = \begin{bmatrix} R_{Si,B} & -R_{Si,B} \lfloor _B t_{B,Si} \rfloor_\times \end{bmatrix} \begin{bmatrix} _B v_{W,B} \\ _B \omega_{W,B} \end{bmatrix}$$

Die Geschwindigkeit eines Sensors kann also durch einen Vektor, der die Linear- und Winkel-Geschwindigkeitsvektoren des starren Körpers umfasst, ausgedrückt werden.

Für mehrere Sensoren 1, 2, ..., I können die entsprechenden Gleichungen zusammengefasst geschrieben werden als Gleichungssystem (4):

$$\begin{bmatrix} _{S1} v_{W,S1} \\ \vdots \\ _{SI} v_{W,SI} \end{bmatrix} = M \begin{bmatrix} _B v_{W,B} \\ _B \omega_{W,B} \end{bmatrix}$$

wobei in der Matrix $M$ die einzelnen Transformationen (relative Drehungen und Translationen) der verschiedenen Sensoren zusammengefasst sind. Da die Matrix $M$ bekannt ist, ergibt sich ein Gleichungssystem, aus dem die Geschwindigkeitsvektoren $_B v_{W,B}$ und $_B \omega_{W,B}$ des Körpers bestimmt werden können, wobei das Gleichungssystem bei einer ausreichend hohen Anzahl von Sensoren im Allgemeinen überbestimmt ist.

Eine Möglichkeit, den Bewegungszustand des Körpers zu bestimmen, d.h. den Linear-Geschwindigkeitsvektor $_B v_{W,B}$ und den Winkelgeschwindigkeitsvektor $_B \omega_{W,B}$ zu bestimmen, besteht darin, zunächst die Geschwindigkeiten $_{Si} v_{W,Si}$ der Sensoren wie weiter oben erläutert zu bestimmen, d.h. für jeden der Sensoren das obige Gleichungssystem (2) mittels eines Regressionsverfahrens zu lösen, und anschließend das vorstehende Gleichungssystem (4) zu lösen, wobei wieder eine Regression (z.B. die Methode der kleinsten Quadrate) verwendet wird. Insgesamt stellt dieser zweistufige Prozess eine Regressionsanalyse dar. Diese zweistufige Vorgehensweise kann als schwach gekoppelter Ansatz bezeichnet werden und hat den Vorteil, dass sie relativ schnell, d.h. im Vergleich zu den weiteren Ansätzen mit relativ wenig Rechenleistung, durchgeführt werden kann.

Eine weitere Vorgehensweise, der sogenannte stark gekoppelte Ansatz, besteht darin, die Linear-Geschwindigkeitsvektor $_B v_{W,B}$ und den Winkelgeschwindigkeitsvektor $_B \omega_{W,B}$ mittels eines Regressionsverfahrens, das eine Regressionsanalyse oder zumindest einen Teil davon darstellt, direkt aus den Dopplergeschwindigkeiten zu bestimmen, d.h. ohne vorherige Bestimmung der Sensor-Geschwindigkeiten aus den Dopplergeschwindigkeiten. Der stark gekoppelte Ansatz führt im Allgemeinen zu einer genaueren Bestimmung des Bewegungszustands.

Dazu werden die obige Gleichung (1) für die Dopplergeschwindigkeit und die obige Gleichung (3), die die Sensor-Geschwindigkeit mit den Geschwindigkeitsvektoren des starren Körpers kombiniert:

$$-d_j = \left( _{Si} \boldsymbol{p}_j^0 \right)^T \boldsymbol{R}_{Si,B} \left( _B \boldsymbol{v}_{W,B} + {}_B \boldsymbol{\omega}_{W,B} \times {}_B \boldsymbol{t}_{B,Si} \right)$$

$$-d_j = \left[ \left( _{Si} \boldsymbol{p}_j^0 \right)^T \boldsymbol{R}_{Si,B} \quad - \left( _{Si} \boldsymbol{p}_j^0 \right)^T \boldsymbol{R}_{Si,B} \lfloor {}_B \boldsymbol{t}_{B,Si} \rfloor_\times \right] \begin{bmatrix} _B \boldsymbol{v}_{W,B} \\ _B \boldsymbol{\omega}_{W,B} \end{bmatrix}$$

Bei einer Vielzahl von Messdatensätzen 1,..., J können diese Gleichungen zu folgendem Gleichungssystem (5) zusammengefasst werden:

$$\begin{pmatrix} -d_1 \\ \vdots \\ -d_J \end{pmatrix} = \begin{bmatrix} \left( _{Si} \boldsymbol{p}_1^0 \right)^T \boldsymbol{R}_{Si,B} & - \left( _{Si} \boldsymbol{p}_1^0 \right)^T \boldsymbol{R}_{Si,B} \lfloor {}_B \boldsymbol{t}_{B,Si} \rfloor_\times \\ \vdots & \vdots \\ \left( _{Si} \boldsymbol{p}_j^0 \right)^T \boldsymbol{R}_{Si,B} & - \left( _{Si} \boldsymbol{p}_j^0 \right)^T \boldsymbol{R}_{Si,B} \lfloor {}_B \boldsymbol{t}_{B,Si} \rfloor_\times \end{bmatrix} \cdot \begin{bmatrix} _B \boldsymbol{v}_{W,B} \\ _B \boldsymbol{\omega}_{W,B} \end{bmatrix}$$

$$\begin{pmatrix} -d_1 \\ \vdots \\ -d_J \end{pmatrix} = \boldsymbol{M} \cdot \begin{bmatrix} _B \boldsymbol{v}_{W,B} \\ _B \boldsymbol{\omega}_{W,B} \end{bmatrix}$$

Hier kann die Vielzahl von Messdatensätzen von jedem von mehreren Sensoren jeweils mehrere Messdatensätze umfassen. Beispielsweise könnten, wenn etwa 4 Sensoren vorgesehen sind, von jedem Sensor je 50 bis 150 Messdatensätze in das Gleichungssystem eingeschlossen sein, insgesamt also 200 bis 600 Messdatensätze. Der Index 'Si' wird hier in einem generischen Sinn verwendet, d.h. es ist in jeder Zeile des Gleichungssystems der jeweilige Sensor bzw. dessen Sensorbezugssystem zu verstehen, dem das Messdatensatz zugeordnet ist. Es können also Messdatensätze verschiedener Sensoren im Gleichungssystem umfasst sein.

Dieses Gleichungssystem kann mittels eines Regressionsverfahrens gelöst werden. Es ist also wie oben ein von den Differenzen bzw. Dopplergeschwindigkeits-Abweichungen $(d_j - \hat{d}_j)$ zwischen den gemessenen Dopplergeschwindigkeiten $d_j$ und geschätzten Dopplergeschwindigkeiten $\hat{d}_j$ abhängiges Funktional F vorgegeben, das durch die Lösung minimiert wird (hier wieder beispielhaft mit quadratischen Abständen):

$$F = F[(d_1 - \hat{d}_1),...,(d_j - \hat{d}_j),...,(d_J - \hat{d}_J)] \sim \sum_j (d_j - \hat{d}_j)^2$$

Auch hier können verschiedene Messdatensätze basierend auf Zusatzparametern der Messdatensätze mit Gewichten bzw. Parametergewichten $g_j$ unterschiedlich gewichtet werden:

EP 4 308 971 B1

$$F = F[g_1(d_1 - \hat{d}_1), ..., g_j(d_j - \hat{d}_j), ..., g_J(d_J - \hat{d}_J)] \sim \sum_j g_j^2(d_j - \hat{d}_j)^2$$

Auch können einzelne Messdatensätze basierend auf Zusatzparametern im Gleichungssystem (5) unberücksichtigt bleiben.

Der Ausdruck 'geschätzte Dopplergeschwindigkeiten' bezieht sich hier, wie auch oben, darauf, das diese für (im Rahmen des Regressionsverfahrens bzw. der Optimierung geschätzten) eine gegebenen Linear-Geschwindigkeitsvektor $_B\boldsymbol{v}_{W,B}$ und einen gegebenen Winkelgeschwindigkeitsvektor $_B\omega_{W,B}$ durch die Zeilen der linken Seite des vorstehenden Gleichungssystems (5) berechnet werden können. Im Regressionsverfahren werden dann ein Linear-Geschwindigkeitsvektor $_B\boldsymbol{v}_{W,B}$ und ein Winkelgeschwindigkeitsvektor $_B\omega_{W,B}$ bestimmt, so dass das jeweilige Funktional optimiert bzw. minimiert wird. Dies stellt eine Bestimmung bzw. Schätzung des Bewegungszustands des Körpers dar.

Figur 3 stellt in einem Diagramm die zeitliche Abfolge mehrerer Bestimmungs- und Messzeitpunkte dar. In dem Diagramm sind entlang einer Zeitachse t mehrere Bestimmungszeitpunkte $T_0$, $T_1$, $T_3$ aufgetragen, die Zeitpunkte darstellen, für die der Bewegungszustand des starren Körpers bestimmt bzw. geschätzt werden soll. Der Bestimmungszeitpunkt ist im Allgemeinen nicht gleich einem Berechnungszeitpunkt, an dem die Bestimmung bzw. Berechnung des Bewegungszustands erfolgt.

Die entsprechenden Bewegungszustände sind mit $Z_0 = Z(T_0)$, $Z_1 = Z(T_1)$, $Z_2 = Z(T_2)$ bezeichnet. Ein Bewegungszustand $Z(T_k)$ zu einem Zeitpunkt $T_k$ ist durch den linearen Geschwindigkeitsvektor $_B\boldsymbol{v}_{W,B}(T_k)$ und den Winkelgeschwindigkeitsvektor $_B\omega_{W,B}(T_k)$ des starren Körpers zum jeweiligen Zeitpunkt $T_k$ charakterisiert.

Die Bestimmungszeitpunkte können, wie gezeigt, regelmäßig voneinander beabstandet sein, wobei ein Zeitabstand $\Delta T$ zwischen zwei aufeinanderfolgenden Bestimmungszeitpunkten gegeben ist als $\Delta T = T_{k+1} - T_k$. Das Inverse $1/\Delta T$ des Zeitabstands $\Delta T$ kann als Bestimmungsfrequenz angesehen werden. Allgemeiner sind jedoch auch unregelmäßig beabstandete Bestimmungszeitpunkte denkbar.

Weiterhin sind in der Figur mehrere Messzeitpunkte eingezeichnet, d.h. Zeitpunkte an denen wenigstens ein Sensor Objekte erfasst. An jedem Messzeitpunkt wird der Sensor eine Vielzahl einzelner Messdatensätze bestimmen, die jeweils zumindest eine Dopplergeschwindigkeit, einen Azimuthwinkel und einen Höhenwinkel eines erfassten Objekts umfassen. Zusätzlich kann jedes der Messdatensätze Zusatzparameter umfassen.

Jedes der Messdatensätze umfasst neben der Dopplergeschwindigkeit, dem Azimuthwinkel und dem Höhenwinkel einen Messzeitpunkt, an dem diese gemessen wurden. Gezeigt sind beispielsweise Messzeitpunkte $t_{-1}$, $t_0$, $t_1$, $t_2$, $t_3$, $t_4$, $t_5$ für zwei Sensoren S1 (Messzeitpunkte $t_{-1}$, $t_1$, $t_3$, $t_4$), S2 (Messzeitpunkte $t_0$, $t_2$, $t_5$), wobei hier $t_{-1}$ zufällig mit $T_0$ zusammenfällt. Die Messzeitpunkte der Sensoren können unabhängig voneinander und/oder unabhängig von den Bestimmungszeitpunkten sein. Auch können gegebenenfalls Messfrequenzen verschiedener Sensoren unterschiedlich sein und/oder verschieden von der Bestimmungsfrequenz sein. In der Figur ist z.B. die Messfrequenz des Sensors S2 gleich der Bestimmungsfrequenz, während der Sensor S1 eine höhere Messfrequenz aufweist. Bevorzugt sind die Messzeitpunkte verschiedener Sensoren voneinander verschieden, um Interferenzen zu vermeiden.

Eine Bestimmungsfrequenz bzw. eine durchschnittliche Anzahl von Bestimmungszeitpunkten je Sekunde kann beispielsweise im Bereich von 5 - 10 Hz liegen. Die Messfrequenz eines Sensors bzw. eine durchschnittliche Anzahl von Messzeitpunkten des Sensors je Sekunde kann beispielsweise im Bereich von 10 - 20 Hz liegen. Die Messfrequenzen (bzw. durchschnittliche Anzahlen von Messzeitpunkten je Sekunde) der Sensoren sind bevorzugt größer als die Bestimmungsfrequenz (bzw. eine durchschnittliche Anzahl von Bestimmungszeitpunkten je Sekunde).

Die Bestimmung bzw. Schätzung des Bewegungszustands erfolgt im Prinzip durch ein Regressionsverfahren bzw. eine Regression wie vorstehend beschrieben, d.h. entsprechend dem schwach gekoppelten Ansatz oder dem stark gekoppelten Ansatz. Dabei werden Messdatensätze mit Messzeitpunkten eingeschlossen, die in zeitlicher Nähe zum Bestimmungszeitpunkt, insbesondere innerhalb bestimmter zeitlicher Grenzen um den Bestimmungszeitpunkt, erfolgt sind. Z.B. können alle Messdatensätze eingeschlossen werden, die innerhalb eines vorgegebenen zeitlichen Abstands dT erfolgt sind, also: $|t_j - T_k| < dT$; hier sind auch unsymmetrische Grenzen mit einem unteren zeitlichen Abstand $d_uT$ und einem oberen zeitlichen Abstand $d_oT$ möglich: $-d_uT < t_j - T_k < d_oT$. Eine weitere Möglichkeit besteht darin, alle Messdatensätze mit Messzeitpunkten $t_j$ einzuschließen, die zwischen dem vorherigen Bestimmungszeitpunkt $T_{k-1}$ und dem nachfolgenden Bestimmungszeitpunkt $T_{k+1}$ liegen: $T_{k-1} < t_j < T_{k+1}$ bzw., ausgedrückt als oberer/unterer zeitlicher Abstand, $d_oT = T_{k+1} - T_k$ und $d_uT = T_k - T_{k-1}$. Bei regelmäßig beabstandeten Bestimmungszeitpunkten gilt: $d_oT = d_uT = \Delta T$.

Allgemein formuliert werden also Messdatensätze mit Messzeitpunkten innerhalb eines Bestimmungszeitraums in die Bestimmung des Bewegungszustands für den Bestimmungszeitpunkt $T_k$ eingeschlossen. Der Bestimmungszeitraum ist durch eine untere und einer obere zeitliche Grenze bestimmt, z.B. kann, entsprechend der vorstehenden Ausführung, das Intervall $[T_k - d_uT; T_k + d_oT]$ ein Bestimmungszeitraum sein. Vorzugsweise liegt der Bestimmungszeitpunkt $T_k$ im Bestimmungszeitraum. Allgemein ist auch denkbar, dass der Bestimmungszeitpunkt $T_k$ außerhalb des Bestimmungszeitraums liegt, d.h. $d_uT < 0$ oder $d_oT < 0$ im vorstehenden Beispiel.

Die Berechnung des Bewegungszustands für einen Bestimmungszeitpunkt erfolgt an mindestens einem Berechnungszeitpunkt, der im Allgemeinen verschieden vom Bestimmungszeitpunkt ist, für den die Bestimmung des Bewegungszustands erfolgt, um auch Messdatensätze mit Messzeitpunkten nach dem Bestimmungszeitpunkt einschließen zu können. In der Figur sind beispielhaft zwei Berechnungszeitpunkte $\lambda_1$, $\lambda_2$, an denen der Bewegungszustand $Z_1$ für den Bestimmungszeitpunkt $T_1$ bestimmt werden kann, eingezeichnet, wobei der erste Berechnungszeitpunkt $\lambda_1$ zwischen zwei Messzeitpunkten $t_2$, $t_3$ liegt und der zweite Berechnungszeitpunkt $\lambda_2$ nach dem Messzeitpunkt $t_3$ liegt, hier beispielhaft zwischen dem Messzeitpunkt $t_3$ und dem Bestimmungszeitpunkt $T_2$. Er könnte aber ebenso mit diesem zusammenfallen. Für die vorstehend beschriebenen zeitlichen Grenzen um den Bestimmungszeitpunkt stellt der Berechnungszeitpunkt eine obere Grenze dar, d.h. die Menge der zu berücksichtigenden Messdatensätze wird dahingehend eingeschränkt, dass nur diejenigen berücksichtigt werden, die zusätzlich die Bedingung $t_j \leq \lambda_b$ erfüllen ($\lambda_b$ steht für einen Berechnungszeitpunkt), d.h. deren Messzeitpunkt am oder vor dem Berechnungszeitpunkt liegt. Zur Bestimmung des Bewegungszustands $Z_1$ in der Figur 3 werden z.B. beim Bestimmungszeitpunkt $\lambda_1$ die Messdatensätze mit Messzeitpunkt $t_3$ nicht berücksichtigt, während beim Bestimmungszeitpunkt $\lambda_2$ die Messdatensätze mit Messzeitpunkt $t_3$ berücksichtigt werden.

Eine Bestimmung des Bewegungszustands für einen Bestimmungszeitpunkt kann mehrmals, an mehreren verschiedenen Berechnungszeitpunkten erfolgen. Etwa könnte immer dann, wenn neue Messdatensätze mit Messzeitpunkten innerhalb der zeitlichen Grenzen für den Bestimmungszeitpunkt vorliegen, eine Bestimmung ausgelöst werden. Es ist hier auch möglich dies nur dann durchzuführen, wenn der Messzeitpunkt nach dem Bestimmungszeitpunkt liegt. Im Prinzip ist es allerdings auch möglich, dass ein Berechnungszeitpunkt vor dem Bestimmungszeitpunkt, für den der Bewegungszustand bestimmt wird, liegt. Beispielsweise könnten die Messdatensätze mit den Messzeitpunkten $t_2$ und $t_3$ am Bestimmungszeitpunkt $\lambda_2$ verwendet werden, um eine Bestimmung bzw. Schätzung für den Bewegungszustand $Z_3$ zum Bestimmungszeitpunkt $T_3$ (in der Figur nicht mehr dargestellt) durchzuführen. Denkbar ist auch, die Berechnungszeitpunkte zeitlich regelmäßig zu beabstanden. Auch könnten die Berechnungszeitpunkte mit den Bestimmungszeitpunkten zusammenfallen, wobei jeweils der Bewegungszustand für den vorherigen Bestimmungszeitpunkt bestimmt wird. Wie die Berechnungszeitpunkte bestimmt werden, ist insbesondere auch abhängig von der zur Verfügung stehenden Rechenleistung.

Um zu berücksichtigen, dass die Messzeitpunkte nicht mit den Bestimmungszeitpunkten zusammenfallen, werden die Messdatensätze im zu minimierenden Funktional F basierend auf dem Messzeitpunkt und dem Bestimmungszeitpunkt gewichtet. Es sind also Gewichte $w_j$, die als Zeitgewichte bezeichnet werden können, vorgesehen, die von der Differenz zwischen Messzeitpunkt $t_j$ und Bestimmungszeitpunkt $T_k$ abhängig sind: $w_j = w_j(t_j - T_k)$, vorzugsweise sind die Gewichte vom Betrag der Differenz abhängig: $w_j = w_j(|t_j - T_k|)$. Diese Gewichte sollten immer positiv oder gleich Null sein.

Die funktionale Abhängigkeit der Gewichte sollte so gewählt sein, dass wenn die Differenz zwischen Messzeitpunkt $t_j$ und Bestimmungszeitpunkt $T_k$ gleich Null ist, das Gewicht seinen maximalen Wert annimmt: $w_j(0) = w_{max}$, und mit zunehmenden Betrag monoton, bevorzugt streng monoton, abnimmt, bis der Wert Null erreicht wird, wobei der Wert Null vorzugsweise dann erreicht wird, wenn die obere Grenze $T_k + d_oT$ bzw. untere Grenze $T_k - d_uT$ der Messzeitpunkte, die berücksichtigt werden, erreicht wird:

$$w_j(T_k + d_oT - T_k) = w_j(d_oT) = 0 = w_j(T_k - d_uT - T_k) = w_j(-d_uT).$$

Der maximale Wert kann als beliebige positive Zahl gewählt werden, z.B. gleich eins: $w_{max} = 1$. Der maximale Wert $w_{max}$ ist für alle Messdatensätze (und gegebenenfalls für andere, zusätzliche Messung, siehe unten) gleich.

Insbesondere kann gelten:

$$w_j = \begin{cases} w_{max}(1 - \dfrac{t_j - T_k}{d_oT}) & ;\text{für} \quad t_j \in [T_k; T_k + d_oT] \\ w_{max}(1 - \dfrac{T_k - t_j}{d_uT}) & ;\text{für} \quad t_j \in [T_k - d_uT; T_k] \\ 0 & ;\text{für} \quad t_j \notin [T_k - d_uT; T_k + d_oT] \end{cases}$$

Allgemeiner kann die vorstehende lineare Abnahme mit zunehmendem Abstand auch durch eine Funktion f, die monoton, bevorzugt streng monoton, mit zunehmenden Argument steigt, modifiziert werden:

$$w_j = \begin{cases} w_{\max} \, \mathrm{f}(1 - \dfrac{t_j - T_k}{d_o T}) & ;\text{für} \qquad t_j \in [T_k ; T_k + d_o T] \\[3mm] w_{\max} \, \mathrm{f}(1 - \dfrac{T_k - t_j}{d_u T}) & ;\text{für} \qquad t_j \in [T_k - d_u T ; T_k] \\[3mm] 0 & ;\text{für} \quad t_j \notin [T_k - d_u T ; T_k + d_o T] \end{cases}$$

Beispielsweise könnte eine quadratische Funktion f(x) = $x^2$ verwendet werden.

Im Funktional F, das im Regressionsverfahren zu minimieren ist, werden die Messdatensätze dann entsprechend gewichtet, d.h. die Differenzen ($d_j$- $\hat{d}_j$) von gemessenen und geschätzten Dopplergeschwindigkeiten werden im Funktional mit dem jeweiligen Zeitgewicht $w_j$ des Messdatensatzes multipliziert, es wird also $w_j$($d_j$- $\hat{d}_j$) im Funktional verwendet:

$$F = F[\mathrm{w}_1(\mathrm{d}_1 - \hat{\mathrm{d}}_1), ..., \mathrm{w}_j(\mathrm{d}_j - \hat{\mathrm{d}}_j), ..., \mathrm{w}_J(\mathrm{d}_J - \hat{\mathrm{d}}_J)] \sim \sum_j w_j^2 (\mathrm{d}_j - \hat{\mathrm{d}}_j)^2$$

Erfolgt zusätzlich eine Gewichtung basierend auf Zusatzparametern der Messdatensätze, werden die Differenzen zusätzlich mit dem jeweiligen Parametergewicht $g_j$ multipliziert, es wird also $g_j w_j$($d_j$- $\hat{d}_j$) im Funktional verwendet:

$$F = F[\mathrm{g}_1 \mathrm{w}_1(\mathrm{d}_1 - \hat{\mathrm{d}}_1), ..., \mathrm{g}_j \mathrm{w}_j(\mathrm{d}_j - \hat{\mathrm{d}}_j), ..., \mathrm{g}_J \mathrm{w}_J(\mathrm{d}_J - \hat{\mathrm{d}}_J)] \sim \sum_j g_j^2 w_j^2 (\mathrm{d}_j - \hat{\mathrm{d}}_j)^2$$

Hier wurde in beiden Fällen wieder das bevorzugte in den Argumenten (d.h. in den gewichteten Differenzen) quadratische Funktional als Beispiel angegeben. Dieses Funktional kann sowohl für die Lösung (im Sinne des Regressionsverfahrens) des Gleichungssystems (5) als auch für die Lösung des Gleichungssystems (2) verwendet werden.

Jede Zeile des Gleichungssystems (5) bzw. des Gleichungssystems (2) stellt eine Bedingung an den Linear-Geschwindigkeitsvektor und Winkelgeschwindigkeitsvektor bzw. an die jeweilige Geschwindigkeit des Sensors dar. Da die Zeilen des jeweiligen Gleichungssystems Messdatensätzen entsprechen, kann jeder Messdatensatz als Bedingung angesehen werden.

Zur Bestimmung des Bewegungszustands für einen Bestimmungszeitpunkt wird an einem Berechnungszeitpunkt aus der Menge aller Messdatensätze eine Menge von Bedingungen, d.h. eine Bedingungsmenge, ausgewählt, die zur Bestimmung des Bewegungszustands verwendet wird. Dies sind insbesondere diejenigen Messdatensätze mit einem Messzeitpunkt, der innerhalb eines Intervalls $[T_k - d_u T; T_k + d_o T]$ um den Bestimmungszeitpunkt $T_k$ liegt (und deren Messzeitpunkt vor oder am Berechnungszeitpunkt liegt).

Es ist hier möglich, weitere, nicht von Messdatensätzen stammende Bedingungen zu der Menge der Bedingungen hinzuzufügen. Dies können Messungen von anderen Messgeräten sein und/oder vorgegebene Einschränkungen an die Bewegung des Körpers.

Vorzugsweise ist ein Drehratensensor bzw. Gyroskop vorgesehen, der bzw. das insbesondere im Ursprung des Körperbezugssystems angeordnet ist. Als zusätzliche Bedingung bzw. Gleichung zum Gleichungssystem (5) ergibt sich dann:

$$_B\, \tilde{\omega}_{W,B} = \begin{bmatrix} \mathbf{0} & \mathbf{I} \end{bmatrix} \begin{bmatrix} _B v_{W,B} \\ _B \omega_{W,B} \end{bmatrix}$$

wobei $_B\tilde{\omega}_{W,B}$ die vom Drehratensensor gemessene Winkelgeschwindigkeit ist und **I** die dreidimensional Einheitsmatrix.

Eine Einschränkung an die Bewegung des Körpers (etwa ein Kraftfahrzeug, das sich in einer Ebene bewegt) könnte beispielsweise wie folgt aussehen, hier als Bedingungen an einzelne Komponenten des Geschwindigkeitsvektors und des Winkelgeschwindigkeitsvektors formuliert:

$$_B\widehat{vz}_{W,B} = 0 \,, \qquad _B\widehat{\omega x}_{W,B} = 0 \,, \qquad _B\widehat{\omega y}_{W,B} = 0$$

Jede dieser Bedingungen wird im Funktional des Regressionsverfahrens mit einem jeweiligen (Zusatzbedingungs-)Gewicht berücksichtigt. Die Größe des Gewichts bestimmt, wie stark die zusätzliche Bedingung bzw. Einschränkung berücksichtigt wird. Weiterhin kann im Falle von Messungen, etwa der Winkelgeschwindigkeitsmessung durch den Drehratensensor, ein (Zeit-)Gewicht vorgesehen sein, das vom Messzeitpunkt in Relation zum Bestimmungszeitpunkt abhängig ist. Insbesondere können solche Zeitgewichte wie im Zusammenhang mit den Messzeitpunkten der Sensoren beschrieben bestimmt werden.

Beispielsweise kann im Fall von Winkelgeschwindigkeitsmessungen durch einen Drehratensensor zum obigen Funktional F ein Zusatzfunktional $F_G$ addiert werden, um ein Gesamtfunktional zu erhalten: $F_{gesamt} = F + F_G$, wobei

$$F_G = F_G[\mathrm{Gw}_G(|_B \tilde{\omega}_{W,B} - _B \hat{\tilde{\omega}}_{W,B}|)] \sim \mathrm{G}^2 \, \mathrm{w}_G^2 \, |_B \tilde{\omega}_{W,B} - _B \hat{\tilde{\omega}}_{W,B}|^2$$

$_B\hat{\tilde{\omega}}_{W,B}$ steht für den geschätzten Winkelgeschwindigkeitsvektor und $|\cdot|$ für die Vektornorm.

$G$ ist das Gewicht, entsprechend dem die Messungen des Drehratensensors berücksichtigt werden;

$w_G$ ist das Zeitgewicht, das basierend auf dem Messzeitpunkt des Drehratensensors bestimmt wird.

Da der Drehratensensor typischerweise ein höhere Genauigkeit als Sensoren aufweist und da im alleigemeinen eine hohe Anzahl von Messdatensätzen und relativ dazu wenige Drehratensensor-Messungen vorliegen, wird das Gewicht $G$ vorzugsweise sehr viel höher als die entsprechende Gewichtung der Sensormessungen gewählt. Diese entsprechende Gewichtung der Sensormessungen ist in den obigen Formeln für das Funktional F jeweils 1 bzw., anders formuliert, da ein konstanter (positiver) Faktor im Funktional für die Optimierung nicht relevant ist, sondern nur eine Normierung darstellt, kann das Funktional für die Messdatensätze so normiert werden, dass diese entsprechende Gewichtung der Sensormessungen gleich 1 ist. Das Gewicht $G$ wird also vorzugsweise sehr viel größer als 1 gewählt: $G \gg 1$; z.B. $G > 10$ oder mehr bevorzugt $G > 100$. Nach oben kann das Gewicht $G$ ebenso eingeschränkt werden, etwa $G < 1000$.

Wie bereits weiter oben erwähnt, wird vorzugsweise ein robustes Regressionsverfahren verwendet, um die Auswirkung von Ausreißern, die insbesondere durch nicht statische Objekte gegeben sind, zu minimieren. Bevorzugt kann eine Methode der iterativ neugewichteten kleinsten Quadrate (IRLS, engl.: iteratively reweighted least squares) verwendet werden.

Hierbei wird vom obigen quadratischen Funktional ausgegangen und die quadratische Abweichung geschätzter von gemessenen Dopplergeschwindigkeiten wird im Funktional für jeden Messdatensatz bzw. für jede Bedingung mit einem Iterationsgewicht $h_{j,k}$ gewichtet, wobei k ein Iterationsparameter und j wie gehabt den Messdatensatz nummeriert. Beispielsweise ergibt sich dann, wobei hier die optionalen Zeitgewichte $w_j$ und Parametergewichte $g_j$ berücksichtigt werden:

$$F_{\mathrm{IRLS}} = \sum_j h_{j,k} g_j^2 w_j^2 (\mathrm{d}_j - \hat{\mathrm{d}}_j)^2$$

Für gegebene Iterationsgewichte $h_{j,k}$ wird dieses Funktional mittels der Methode der kleinsten Quadrate minimiert. Basierend auf der gefundenen Lösung, d.h. auf den gefundenen $\hat{d}_j$, werden neue Iterationsgewichte $h_{j,k+1}$ bestimmt. Dabei werden Iterationsgewichte, für die die gefundenen geschätzten Dopplergeschwindigkeiten eine hohe Abweichung von den gemessen Dopplergeschwindigkeiten aufweisen, in Relation zu solchen mit geringer Abweichung verringert. Als Anfangswert $h_{j,0}$ für die Iterationsgewichte kann ein bestimmter Wert vorgeben werden, etwa 1: $h_{j,0} = 1$, für alle j.

Bisher wurden die in den Messdatensätzen enthaltenen Azimuthwinkel $\theta$ und Höhenwinkel $\phi$, die in den zu lösenden Gleichungssystemen jeweils auf der linken Seite enthalten sind, als exakt angenommen. Im Allgemeinen stellen diese allerdings als Messwerte fehlerbehaftete Werte dar. Um dies zu berücksichtigen, kann vorzugsweise weiterhin eine Fehler-in-den-Variablen-Regression (Error-in-Variables-Regression) verwendet werden.

Dabei kann wie folgt vorgegangen werden: Zunächst wird der Bewegungszustand mittels des vorstehend beschriebenen stark gekoppelten Ansatzes bestimmt bzw. geschätzt. Anschließend wird, unter Verwendung des bestimmten Bewegungszustands, eine Fehler-in-den-Variablen-Regression durchgeführt, um Azimuthwinkel $\theta$ und/oder Höhenwinkel $\phi$ zu optimieren. Mit dem bestimmten optimierten Azimuthwinkel $\theta$ und/oder Höhenwinkel $\phi$ wird der Bewegungszustand mittels des stark gekoppelten Ansatzes erneut bestimmt bzw. geschätzt und basierend darauf wieder Azimuthwinkel $\theta$ und/oder Höhenwinkel $\phi$ erneut optimiert. Dies wird wiederholt, bis die Ergebnisse konvergieren, z.B. bis sich aufeinander folgende bestimmte Bewegungszustände innerhalb einer vorgegebenen Toleranz nicht mehr ändern, und/oder bis eine vorgegebene maximale Anzahl von Wiederholungen erreicht ist. Insgesamt stellt dieses Vorgehen wieder eine Regressionsanalyse dar.

Werden die Bewegungszustände des starren Körpers für mehrere aufeinander folgende Bestimmungszeitpunkte bestimmt, kann durch zeitliche Integration der Linear-Geschwindigkeitsvektoren $_B\mathbf{v}_{W,B}$ und/oder der Winkelgeschwindigkeitsvektoren $_B\omega_{W,B}$ eine relative Position und/oder Orientierung des Körpers an einem End-Bestimmungszeitpunkt $T_{End}$ relativ zu einer Anfangsposition und/oder Anfangsorientierung, die zu einem Anfangs-Bestimmungszeitpunkt $T_{Anfang}$ vorlag, berechnet werden. Da der Bewegungszustand nur für diskrete Bestimmungszeitpunkte bestimmt wird, ist das zeitliche Integral typischerweise als Summe gegeben.

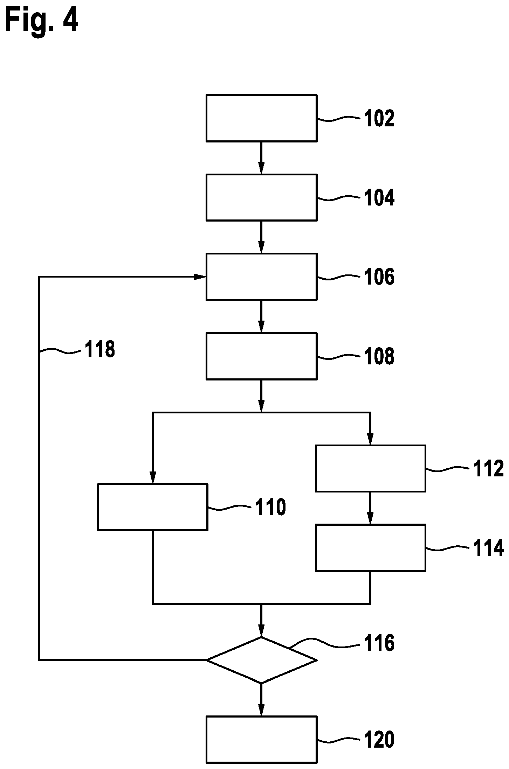

Figur 4 zeigt ein Ablaufdiagramm einer bevorzugten Ausführungsform der Erfindung.

In Schritt 102 werden Messdatensätze durch einen oder mehrere Sensoren erhalten. Ebenso können weitere Messergebnisse erfasst werden, insbesondere Drehratenmessergebnisse durch einen Drehratensensor bzw. ein Gyroskop. Die Erfassung kann zu mehreren Messzeitpunkten erfolgen, insbesondere kann jeder Sensor fortlaufend, etwa mit einer bestimmten Messfrequenz, Messungen durchführen und die Messergebnisse erfassen.

In Schritt 104 werden die Messdatensätze und gegebenenfalls weiteren Messergebnisse an eine Recheneinheit übermittelt. Dabei werden die Messdatensätze von den Sensoren an die Recheneinheit gesendet und von dieser empfangen. Ebenso werden gegebenenfalls die weiteren Messergebnisse von den jeweiligen Messsensoren an die Recheneinheit gesendet und von dieser empfangen. In beiden Fällen können die Sensoren direkt oder indirekt mit der Recheneinheit verbunden sein, auch eine Zwischenspeicherung kann vorgesehen sein, um eine spätere Auswertung (d.h. Bestimmung des Bewegungszustands) durchzuführen. Die Recheneinheit kann sich am oder im starren Körper, dessen Bewegungszustand bestimmt werden soll, befinden. Ebenso kann es sich um eine vom Körper entfernte Recheneinheit, z.B. ein entfernter Computer oder Server, handeln. Die Messergebnisse können an die Recheneinheit über ein Kommunikationsnetzwerk (beispielsweise auch drahtlos) oder auch auf geeigneten Datenträgern (z.B. im Fall einer späteren Auswertung) übermittelt werden.

Die Schritte 102 und 104 können zusammen als Bereitstellungsschritt angesehen werden. Eine Bereitstellung kann auch auf andere Weise erfolgen, z.B. wenn die Messdatensätze und weiteren Messergebnisse bereits als gespeicherte Daten vorhanden sind, oder wenn simulierte Messdatensätze verwendet werden. Insofern handelt es sich bei den Schritten 102 und 104 um bevorzugte Schritte.

In Schritt 106 wird wenigstens eine Bedingungsmenge aus den Messdatensätzen und gegebenenfalls weiteren Messergebnissen gebildet. Dabei wird wie vorstehend in Zusammenhang mit Figur 3 beschrieben vorgegangen. Es werden also für einen Bestimmungszeitpunkt, für den der Bewegungszustand bestimmt bzw. berechnet werden soll, Messdatensätze und gegebenenfalls weitere Messergebnisse mit Messzeitpunkten innerhalb eines Bestimmungszeitraums in eine Bedingungsmenge aufgenommen. Dies kann ein oder mehrmals an entsprechenden Berechnungszeitpunkten erfolgen.

Im bevorzugten Schritt 108 werden Gewichte bestimmt, mit denen die in der Bedingungsmenge eingeschlossenen Messdatensätze und gegebenenfalls weiteren Messergebnisse im Funktional, das in der Regressionsanalyse verwendet wird, gewichtet werden. Das sind, wie vorstehend beschrieben, Zeitgewichte und/oder Parametergewichte und/oder, gegebenenfalls, Gewichte, mit denen die weiteren Messergebnisse relativ zu den Messdatensätzen gewichtet werden. Diese Gewichte werden vor der Durchführung der eigentlichen Regressionsmethode bestimmt und bleiben während der Durchführung der Regressionsmethode unverändert (für einen Berechnungszeitpunkt). Zusätzlich können während der Regressionsanalyse weitere, von den vorstehenden verschiedene Gewichte verwendet werden, die gegebenenfalls über mehrere Iterationen der Regressionsmethode verändert werden, z.B. die oben genannten Iterationsgewichte im Fall von IRLS. Auch eine Filterung kann hier erfolgen, in der bestimmte Messdatensätze basierend auf Zusatzparametern der Messdatensätze aus einer Bedingungsmenge ausgeschlossen werden.

Anschließend erfolgt basierend auf der wenigstens einen Bedingungsmenge eine Regressionsanalyse, in der der Bewegungszustand (Linear-Geschwindigkeitsvektor und Winkelgeschwindigkeitsvektor) des Körpers bestimmt wird.

Dabei kann einerseits, Schritt 110, entsprechend dem stark gekoppelten Ansatz vorgegangen werden, d.h. in der Regressionsanalyse werden die Dopplergeschwindigkeiten direkt mit dem Bewegungszustand in Beziehung gesetzt (Gleichungssystem (5)).

Andererseits kann entsprechend dem schwach gekoppelten Ansatz vorgegangen werden. Dabei werden in Schritt 112 zunächst die Sensor-Geschwindigkeitsvektoren bestimmt, indem diese in einem Regressionsverfahren mit den Dopplergeschwindigkeiten in Beziehung gesetzt werden. Anschließend, Schritt 114, wird aus den Sensor-Geschwindigkeitsvektoren in einer weiteren Regression der Bewegungszustand berechnet.

Bei den Schritten 110, 112 und 114 können, wie vorstehend bei Schritt 108 erläutert, gegebenenfalls im Rahmen der jeweilig verwendeten Regressionsmethode (etwa im Rahmen von IRLS) weitere, veränderliche Gewichte verwendet werden, die von den Zeitgewichten, Parametergewichten und Gewichten, mit denen weiteren Messergebnisse gewichtet werden, verschieden sind.

In einem bevorzugten Schritt 116 kann bestimmt werden, ob der Bewegungszustand des Fahrzeugs für einen weiteren Bestimmungszeitpunkt und/oder basierend auf einem anderen Bestimmungszeitraum, etwa wenn inzwischen neue Messdatensätze vorliegen, bestimmt werden soll. Wenn dies der Fall ist, kann zu Schritt 106 zurückgesprungen werden (Pfeil 118), in dem wenigstens eine neue Bedingungsmenge für den weiteren Bestimmungszeitpunkt und/oder basierend auf einem anderen Bestimmungszeitraum bestimmt wird. Unabhängig davon kann für bereits berechnete Bewegungszustände mit dem optionalen Schritt 120 fortgefahren werden.

Im bevorzugten Schritt 120 kann der berechnete Bewegungszustand bzw. können berechnete Bewegungszustände ausgegeben und/oder für eine weitere Verarbeitung weitergegeben werden. Insbesondere kann, wenn Bewegungszustände für mehrere aufeinanderfolgende Bestimmungszeitpunkte bestimmt wurden, eine Integration der Bewegungszustände über die Zeit erfolgen, um eine relative Position und Orientierung des Körpers zwischen einem Anfangszustand zu einem früheren Bestimmungszeitpunkt und einem Endzustand zu einem späteren Bestimmungszeitpunkt zu bestimmen.

## Patentansprüche

1. Computerimplementiertes Verfahren zur Bestimmung eines Bewegungszustands eines starren Körpers (2) relativ zu einer Umgebung mittels einer Vielzahl von Messdatensätzen zu Objekten (4) in der Umgebung des Körpers,

   wobei jeder Messdatensatz jeweils einen Messzeitpunkt und eine Dopplergeschwindigkeit (d) und einen Azimuthwinkel ($\theta$) bezüglich eines Sensorbezugssystems (S) eines Sensors (S1, S2, S3, S4) umfasst, umfassend

   Bestimmen des Bewegungszustands des Körpers relativ zu der Umgebung als ein Geschwindigkeitsvektor ($\mathbf{v_x}$, $\mathbf{v_y}$) und ein Winkelgeschwindigkeitsvektor ($\omega_z$) in einem Körperbezugssystem (B), wobei jedes Sensorbezugssystem durch eine nichtsinguläre Transformation (R, t) in das Körperbezugssystem umgerechnet wird,
   wobei wenigstens eine Bedingungsmenge gebildet wird (106), die mehrere Messdatensätze umfasst,
   wobei in einer Regressionsanalyse für die wenigstens eine Bedingungsmenge ein Funktional, das von Dopplergeschwindigkeits-Abweichungen zwischen geschätzten Dopplergeschwindigkeiten und den Dopplergeschwindigkeiten der in der wenigstens einen Bedingungsmenge umfassten Messdatensätze abhängig ist, minimiert wird (110, 112),
   wobei die geschätzten Dopplergeschwindigkeiten in der Regressionsanalyse als abhängige Variablen dargestellt werden,
   wobei eine oder mehrere Komponenten des Geschwindigkeitsvektors und des Winkelgeschwindigkeitsvektors durch die Regressionsanalyse bestimmt werden;
   wobei mehrere Bedingungsmengen gebildet werden, die jeweils Messdatensätze nur eines einzelnen Sensors umfassen;
   wobei mehrere Sensor-Geschwindigkeitsvektoren ($\mathbf{V_S}$) in dem jeweiligen Sensorbezugssystem (S) bestimmt werden (112), indem für jede der Bedingungsmengen in der Regressionsanalyse die geschätzten Dopplergeschwindigkeiten weiterhin als von dem Sensor-Geschwindigkeitsvektor abhängig dargestellt werden, und der Sensor-Geschwindigkeitsvektor so bestimmt wird, dass das jeweilige Funktional minimiert wird; und
   wobei in einer weiteren Regression der Geschwindigkeitsvektor und der Winkelgeschwindigkeitsvektor so bestimmt werden (114), dass ein Regressions-Funktional minimiert wird, das von Sensor-Abweichungen zwischen den Sensor-Geschwindigkeitsvektoren und geschätzten Sensor-Geschwindigkeitsvektoren abhängig ist, wobei die Sensor-Geschwindigkeitsvektoren unter Verwendung der Transformation zwischen dem Körperbezugssystem und dem jeweiligen Sensorbezugssystem als von dem Geschwindigkeitsvektor und dem Winkelgeschwindigkeitsvektor abhängig dargestellt werden.

2. Verfahren nach Anspruch 1, wobei ein oder mehrere, insbesondere alle, der Messdatensätze einen Höhenwinkel ($\phi$) umfassen; wobei bevorzugt zumindest einige dieser ein oder mehreren, insbesondere alle, Messdatensätze aus Messergebnissen bestimmt werden, die lediglich den Messzeitpunkt, die Dopplergeschwindigkeit und den Azimuthwinkel umfassen, wobei der Höhenwinkel gleich einem vorbestimmten Wert, insbesondere gleich Null, gesetzt wird.

3. Verfahren nach einem der vorstehenden Ansprüche, wobei die Messdatensätze mittels eines oder mehrerer an dem Körper (2) angebrachter Sensoren (S1, S2, S3, S4), die die Umgebung des Körpers erfassen, erfasst werden (102).

4. Verfahren nach einem der vorstehenden Ansprüche, wobei die Messdatensätze wenigstens zwei Messdatensätze eines Sensors mit verschiedenen Messzeitpunkten ($t_{-1}$, $t_0$, $t_1$, $t_2$, $t_3$, $t_4$, $t_5$) umfassen.

5. Verfahren nach einem der vorstehenden Ansprüche, wobei die Messzeitpunkte ($t_{-1}$, $t_0$, $t_1$, $t_2$, $t_3$, $t_4$, $t_5$) von Messdatensätzen mindestens zweier unterschiedlicher Sensoren (S1, S2) voneinander verschieden sind.

6. Verfahren nach einem der vorstehenden Ansprüche, wobei an wenigstens einem Berechnungszeitpunkt ($\lambda_1$, $\lambda_2$) der Bewegungszustand für einen Bestimmungszeitpunkt ($T_1$) bestimmt wird; wobei die wenigstens eine Bedingungsmenge aus den Messdatensätzen gebildet wird, deren Messzeitpunkte innerhalb eines Bestimmungszeitraums liegen.

7. Verfahren nach Anspruch 6, wobei in dem Funktional die Dopplergeschwindigkeits-Abweichungen mit einem positiven Zeitgewicht multipliziert werden, das eine Funktion der Zeitdifferenz zwischen dem Messzeitpunkt ($t_{-1}$, $t_0$, $t_1$, $t_2$, $t_3$, $t_4$, $t_5$) des jeweiligen Messdatensatzes und dem Bestimmungszeitpunkt ($T_1$), für den der Bewegungszustand bestimmt wird, ist; wobei bevorzugt das Zeitgewicht mit zunehmenden Betrag der Zeitdifferenz abnimmt.

8. Verfahren nach einem der Ansprüche 6 oder 7, wobei der Bewegungszustand für mehrere aufeinanderfolgende Bestimmungszeitpunkte ($T_0$, $T_1$, $T_2$) bestimmt wird, wobei jeder Bestimmungszeitraum der mehreren aufeinanderfolgenden Bestimmungszeitpunkte ($T_0$, $T_1$, $T_2$) eine untere zeitliche Grenze und eine obere zeitliche Grenze aufweist, wobei die untere zeitliche Grenze gleich einem vorherigen Bestimmungszeitpunkt der mehreren aufeinanderfolgenden Bestimmungszeitpunkte ($T_0$, $T_1$, $T_2$) ist und die obere zeitliche Grenze gleich einem nachfolgenden Bestimmungszeitpunkt der mehreren aufeinanderfolgenden Bestimmungszeitpunkte ($T_0$, $T_1$, $T_2$) oder dem jeweiligen Berechnungszeitpunkt ist.

9. Verfahren nach einem der Ansprüche 6 bis 8,

wobei eine erste Bestimmung des Bewegungszustands für den Bestimmungszeitpunkt ($T_1$) basierend auf einem ersten Bestimmungszeitraum erfolgt und eine zweite Bestimmung des Bewegungszustands für den Bestimmungszeitpunkt basierend auf einem zweiten Bestimmungszeitraum erfolgt; wobei der zweite Bestimmungszeitraum verschieden vom ersten Bestimmungszeitraum ist und wenigstens einen Messzeitpunkt umfasst, der im ersten Bestimmungszeitraum nicht umfasst ist;
wobei bevorzugt die erste Bestimmung an einem ersten Berechnungszeitpunkt ($\lambda_1$) erfolgt und die zweite Bestimmung an einem späteren zweiten Berechnungszeitpunkt ($\lambda_2$) erfolgt, wobei eine obere zeitliche Grenze des zweiten Bestimmungszeitraums zeitlich nach dem ersten Berechnungszeitpunkt liegt.

10. Verfahren nach Anspruch 1, wobei jede der Bedingungsmengen nur Messdatensätze umfasst, die den gleichen Messzeitpunkt aufweisen;
wobei, falls abhängig von Anspruch 6, in dem Regressions-Funktional die Sensor-Abweichungen jeweils mit einem Gewicht multipliziert werden, das eine Funktion der Zeitdifferenz zwischen dem Messzeitpunkt der jeweiligen Bedingungsmenge und dem Bestimmungszeitpunkt, für den der Bewegungszustand bestimmt wird, ist.

11. Verfahren nach einem der vorstehenden Ansprüche, wobei die Bedingungsmengen wenigstens eine Komponenteneinschränkung an wenigstens eine Komponente des Geschwindigkeitsvektors und/oder des Winkelgeschwindigkeitsvektors in Form wenigstens eines Komponentenvorgabewerts umfassen; wobei das Regressions-Funktional weiterhin von einer Komponenten-Abweichung zwischen dem wenigstens eines Komponentenvorgabewert und wenigstens einem geschätzten Komponentenvorgabewert abhängig ist.

12. Verfahren nach Anspruch 11, wobei wenigstens eine Winkelgeschwindigkeitskomponente im Körperbezugssystem als Komponentenvorgabewert verwendet wird, die insbesondere durch einen Drehratensensor bestimmt wird;
wobei falls abhängig von Anspruch 6, in dem Regressions-Funktional die wenigstens eine Komponenten-Abweichung mit einem Gewicht multipliziert wird, das eine Funktion der Zeitdifferenz zwischen einem Messzeitpunkt der Winkelgeschwindigkeitskomponente und dem Bestimmungszeitpunkt, für den der Bewegungszustand bestimmt wird, ist.

13. Verfahren nach einem der vorstehenden Ansprüche, wobei die Messdatensätze wenigstens einen Zusatzparameter ausgewählt aus einer Entfernung des erfassten Objekts, einer Varianz der Entfernung, einer Varianz des Azimuthwinkels, einer Varianz des Höhenwinkels, einer Varianz der Dopplergeschwindigkeit, einer Signalstärke des empfangenen Signals, einem Querschnitt, insbesondere Radarquerschnitt oder Lidarquerschnitt, umfassen, jeweils bezogen auf das erfasste Objekt des jeweiligen Messdatensatzes, und/oder einem Typ des Sensors, und, falls abhängig von Anspruch 3, einer Anordnung des Sensors am Körper;
wobei die Dopplergeschwindigkeits-Abweichungen mit einem Zusatzgewicht multipliziert werden, das eine Funktion des jeweiligen Zusatzparameters ist, und/oder wobei ein Messdatensatz verworfen wird, wenn der wenigstens eine Zusatzparameter außerhalb wenigstens eines vorbestimmten Bereichs liegt.

**EP 4 308 971 B1**

14. Verfahren nach einem der vorstehenden Ansprüche,

   wobei die Regressionsanalyse unter Verwendung einer Fehler-in-den-Variablen-Regressionsverfahrens erfolgt, wobei die Azimuthwinkel und/oder, falls abhängig von Anspruch 2, die Höhenwinkel optimiert werden; und/oder wobei die Regressionsanalyse unter Verwendung eines iterativneugewichteten-kleinsten-Quadrat-Verfahrens erfolgt.

15. Verfahren zur Bestimmung einer relativen Position und/oder einer relativen Orientierung eines starren Körpers (2), umfassend

   Bestimmen mehrerer Bewegungszustände des Körpers für mehrere aufeinanderfolgende Bestimmungszeitpunkte ($T_0$, $T_1$, $T_2$) mit einem Verfahren nach einem der vorstehenden Ansprüche, falls abhängig von Anspruch; Integrieren der Bewegungszustände über die Zeit zwischen einem Anfangs-Bestimmungszeitpunkt der mehreren Bestimmungszeitpunkte und einem End-Bestimmungszeitpunkt der mehreren Bestimmungszeitpunkte, um die relative Position und/oder die relative Orientierung als Ergebnisse dieser Integration zu erhalten.

16. Recheneinheit (12), die dazu eingerichtet ist, eine Vielzahl von Messdatensätzen bzw., soweit abhängig von Anspruch 2, Messergebnissen zu erhalten und ein Verfahren nach einem der vorstehenden Ansprüche durchzuführen.

17. Fahrzeug und/oder Roboter, insbesondere Kraftfahrzeug (2), umfassend
   eine Recheneinheit (12) nach Anspruch 16, und
   einen oder mehrere an einem Körper des Fahrzeugs und/oder Roboters angebrachte Sensoren (S1, S2, S3, S4), die eine Umgebung des Körpers erfassen und die dazu eingerichtet sind, Messungen zu Objekten in der Umgebung durchzuführen und dabei erfasste Messdatensätze an die Recheneinheit zu senden; wobei die Sensoren bevorzugt Radarsensoren und/oder Lidarsensoren sind.

18. Computerprogramm, das eine Recheneinheit dazu veranlasst, alle Verfahrensschritte eines Verfahrens nach einem der Ansprüche 1 bis 15 durchzuführen, wenn es auf der Recheneinheit ausgeführt wird.

19. Maschinenlesbares Speichermedium mit einem darauf gespeicherten Computerprogramm nach Anspruch 18.

**Claims**

1. Computer-implemented method for determining a state of movement of a rigid body (2) relative to an environment by means of a multiplicity of measurement data sets relating to objects (4) in the environment of the body,

   wherein each measurement data set respectively comprises a measurement time and a Doppler velocity (d) and an azimuth angle ($\theta$) with respect to a sensor reference system (S) of a sensor (S1, S2, S3, S4), comprising determining the state of movement of the body relative to the environment as a velocity vector ($v_x$, $v_y$) and an angular velocity vector ($\omega_z$) in a body reference system (B), wherein each sensor reference system is converted into the body reference system by way of a non-singular transformation (R, t),
   wherein at least one set of conditions comprising a plurality of measurement data sets is formed (106),
   wherein, in a regression analysis for the at least one set of conditions, a functional, which is dependent on Doppler velocity deviations between estimated Doppler velocities and the Doppler velocities of the measurement data sets included in the at least one set of conditions, is minimized (110, 112),
   wherein the estimated Doppler velocities are represented as dependent variables in the regression analysis,
   wherein one or more components of the velocity vector and the angular velocity vector are determined by the regression analysis;
   wherein a plurality of sets of conditions, each comprising measurement data sets of only a single sensor, are formed;
   wherein a plurality of sensor velocity vectors ($V_s$) in the respective sensor reference system (S) are determined (112) by continuing to represent the estimated Doppler velocities for each of the sets of conditions in the regression analysis as dependent on the sensor velocity vector, and the sensor velocity vector is determined such that the respective functional is minimized; and
   in a further regression, the velocity vector and the angular velocity vector are determined (114) such that a regression functional, which is dependent on sensor deviations between the sensor velocity vectors and the estimated sensor velocity vectors, is minimized, wherein the sensor velocity vectors are represented as dependent on the velocity vector and the angular velocity vector using the transformation between the body reference system and the respective sensor reference system.

2. Method according to Claim 1, wherein one or more, in particular all, of the measurement data sets comprise an elevation angle ($\phi$); wherein preferably at least some of these one or more, in particular all, measurement data sets are determined from measurement results which only comprise the measurement time, the Doppler velocity and the azimuth angle, wherein the elevation angle is set equal to a predetermined value, in particular equal to zero.

3. Method according to one of the preceding claims, wherein the measurement data sets are captured (102) by means of one or more sensors (S1, S2, S3, S4) which are attached to the body (2) and capture the environment of the body.

4. Method according to one of the preceding claims, wherein the measurement data sets comprise at least two measurement data sets of a sensor with different measurement times ($t_{-1}, t_0, t_1, t_2, t_3, t_4, t_5$).

5. Method according to one of the preceding claims, wherein the measurement times ($t_{-1}, t_0, t_1, t_2, t_3, t_4, t_5$) of measurement data sets of at least two different sensors (S1, S2) are different from each other.

6. Method according to one of the preceding claims, wherein the state of movement is determined for a determination time ($T_1$) at at least one calculation time ($\lambda_1, \lambda_2$), wherein the at least one set of conditions is formed from the measurement data sets whose measurement times are within a determination period.

7. Method according to Claim 6, wherein in the functional the Doppler velocity deviations are multiplied by a positive time weight which is a function of the time difference between the measurement time ($t_{-1}, t_0, t_1, t_2, t_3, t_4, t_5$) of the respective measurement data set and the determination time ($T_1$) for which the state of movement is determined; wherein the time weight preferably decreases with increasing absolute value of the time difference.

8. Method according to either of Claims 6 and 7, wherein the state of movement is determined for a plurality of successive determination times ($T_0, T_1, T_2$), wherein each determination period of the plurality of successive determination times ($T_0, T_1, T_2$) has a lower time limit and an upper time limit, wherein the lower time limit is equal to a previous determination time of the plurality of successive determination times ($T_0, T_1, T_2$) and the upper time limit is equal to a subsequent determination time of the plurality of successive determination times ($T_0, T_1, T_2$) or the respective calculation time.

9. Method according to one of Claims 6 to 8,

wherein a first determination of the state of movement for the determination time ($T_1$) is based on a first determination period and a second determination of the state of movement for the determination time is based on a second determination period; wherein the second determination period is different from the first determination period and includes at least one measurement time not included in the first determination period; wherein the first determination is preferably carried out at a first calculation time ($\lambda_1$) and the second determination is carried out at a later, second calculation time ($\lambda_2$), wherein an upper time limit of the second determination period is after the first calculation time.

10. Method according to Claim 1, wherein each of the sets of conditions comprises only measurement data sets having the same measurement time; wherein, if dependent on claim 6, in the regression functional, the sensor deviations are each multiplied by a weight which is a function of the time difference between the measurement time of the respective set of conditions and the determination time for which the state of movement is determined.

11. Method according to one of the preceding claims, wherein the sets of conditions comprise at least one component restriction on at least one component of the velocity vector and/or the angular velocity vector in the form of at least one component default value; wherein the regression functional further depends on a component deviation between the at least one component default value and at least one estimated component default value.

12. Method according to Claim 11, wherein at least one angular velocity component, which is determined in particular by a rate-of-rotation sensor, is used as a component default value in the body reference system; wherein, if dependent on claim 6, in the regression functional, the at least one component deviation is multiplied by a weight which is a function of the time difference between a measurement time of the angular velocity component and the determination time for which the state of movement is determined.

13. Method according to one of the preceding claims, wherein the measurement data sets comprise at least one additional parameter selected from a distance of the captured object, a variance of the distance, a variance of the azimuth angle, a variance of the elevation angle, a variance of the Doppler velocity, a signal strength of the received signal, a cross section, in particular a radar cross section or lidar cross section, in each case based on the captured object of the respective measurement data set, and/or a type of sensor, and, if dependent on claim 3, an arrangement of the sensor on the body;

wherein the Doppler velocity deviations are multiplied by an additional weight which is a function of the respective additional parameter, and/or wherein a measurement data set is discarded if the at least one additional parameter is outside at least one predetermined range.

14. Method according to one of the preceding claims,

wherein the regression analysis is carried out using an errors-in-variables regression method, wherein the azimuth angles and/or, if dependent on claim 2, the elevation angles are optimized;
and/or wherein the regression analysis is carried out using an iterative-reweighted-least-squares method.

15. Method for determining a relative position and/or a relative orientation of a rigid body (2), comprising

determining a plurality of states of movement of the body for a plurality of successive determination times ($T_0$, $T_1$, $T_2$) using a method according to one of the preceding claims, if dependent on claim;
integrating the states of movement over the time between an initial determination time of the plurality of determination times and an end determination time of the plurality of determination times in order to obtain the relative position and/or the relative orientation as results of this integration.

16. Computing unit (12) which is configured to obtain a multiplicity of measurement data sets or, if dependent on claim 2, measurement results and to carry out a method according to one of the preceding claims.

17. Vehicle and/or robot, in particular motor vehicle (2), comprising a computing unit (12) according to Claim 16, and one or more sensors (S1, S2, S3, S4) which are attached to a body of the vehicle and/or robot and capture an environment of the body and are configured to carry out measurements on objects in the environment and to send captured measurement data sets to the computing unit; wherein the sensors are preferably radar sensors and/or lidar sensors.

18. Computer program that prompts a computing unit to perform all of the method steps of a method according to one of Claims 1 to 15 when it is executed on the computing unit.

19. Machine-readable storage medium with a computer program according to Claim 18 stored thereon.

**Revendications**

1. Procédé implémenté par ordinateur permettant de déterminer un état de mouvement d'un corps rigide (2) par rapport à un environnement au moyen d'une pluralité de jeux de données de mesure relatifs à des objets (4) dans l'environnement du corps,

chaque jeu de données de mesure comprenant chacun un moment de mesure et une vitesse Doppler (d) et un angle azimutal ($\theta$) par rapport à un système de référence de capteur (S) d'un capteur (S1, S2, S3, S4), comprenant détermination de l'état de mouvement du corps par rapport à l'environnement en tant que vecteur de vitesse ($v_x$, $v_y$) et que vecteur de vitesse angulaire ($\omega_z$) dans un système de référence de corps (B), chaque système de référence de capteur étant converti en le système de référence de corps par une transformation non singulière (R, t),
au moins une quantité de conditions, qui comprend plusieurs jeux de données de mesure, étant formée (106), une fonction, qui dépend d'écarts de vitesse Doppler entre des vitesses Doppler estimées et des vitesses Doppler des jeux de données de mesure compris dans l'au moins une quantité de conditions, étant minimisée (110, 112) dans une analyse de régression pour l'au moins une quantité de conditions, les vitesses Doppler estimées étant représentées comme des variables dépendantes dans l'analyse de régression,

une ou plusieurs composantes du vecteur de vitesse et du vecteur de vitesse angulaire étant déterminées par l'analyse de régression ;

plusieurs quantités de conditions, qui comprennent chacune des jeux de données de mesure d'un seul capteur individuel, étant formées ;

plusieurs vecteurs de vitesse de capteur ($V_s$) étant déterminés (112) dans le système de référence de capteur (S) respectif en ce que, pour chacune des quantités de conditions dans l'analyse de régression, les vitesses Doppler estimées continuent d'être représentées comme dépendantes du vecteur de vitesse de capteur, et le vecteur de vitesse de capteur étant déterminé de telle sorte que la fonction respective est minimisée ; et

le vecteur de vitesse et le vecteur de vitesse angulaire étant déterminés (114) de telle sorte dans une régression ultérieure qu'une fonction de régression, qui dépend d'écarts de capteur entre les vecteurs de vitesse de capteur et les vecteurs de vitesse de capteur estimés, est minimisée, les vecteurs de vitesse de capteur étant représentés comme dépendant du vecteur de vitesse et du vecteur de vitesse angulaire en utilisant la transformation entre le système de référence de corps et le système de référence de capteur respectif.

2. Procédé selon la revendication 1, un ou plusieurs, en particulier tous les jeux de données de mesure comprenant un angle de hauteur ($\phi$) ; de manière préférée, au moins certains desdits un ou plusieurs, en particulier tous les, jeux de données de mesure étant déterminés à partir de résultats de mesure, qui ne comprennent que le moment de mesure, la vitesse Doppler et l'angle azimutal, l'angle d'élévation étant réglé pour être égal à une valeur prédéterminée, en particulier égal à zéro.

3. Procédé selon l'une des revendications précédentes, les jeux de données de mesure étant détectés (102) au moyen d'un ou de plusieurs capteurs (S1, S2, S3, S4) installés sur le corps (2), qui détectent l'environnement du corps.

4. Procédé selon l'une des revendications précédentes, les jeux de données de mesure comprenant au moins deux jeux de données de mesure d'un capteur avec différents moments de mesure ($t_{-1}$, $t_0$, $t_1$, $t_2$, $t_3$, $t_4$, $t_5$).

5. Procédé selon l'une des revendications précédentes, les moments de mesure ($t_{-1}$, $t_0$, $t_1$, $t_2$, $t_3$, $t_4$, $t_5$) de jeux de données de mesure d'au moins deux capteurs (S1, S2) différents étant différents les uns des autres.

6. Procédé selon l'une des revendications précédentes, l'état de mouvement étant déterminé sur au moins un moment de calcul ($\lambda_1$, $\lambda_2$) pour un moment de détermination ($T_1$) ; l'au moins une quantité de conditions étant formée à partir des jeux de données de mesure dont les moments de mesure se situent dans une période de temps de détermination.

7. Procédé selon la revendication 6, les écarts de vitesse Doppler étant multipliés dans la fonction par une pondération temporelle positive, qui est une fonction de la différence temporelle entre le moment de mesure ($t_{-1}$, $t_0$, $t_1$, $t_2$, $t_3$, $t_4$, $t_5$) du jeu de données de mesure respectif et le moment de détermination ($T_1$), pour lequel l'état de mouvement est déterminé ;

la pondération temporelle diminuant de manière préférée au fur et à mesure que la différence temporelle augmente.

8. Procédé selon l'une des revendications 6 et 7, l'état de mouvement étant déterminé pour plusieurs moments de détermination successifs ($T_0$, $T_1$, $T_2$), chaque période de détermination des plusieurs moments de détermination successifs ($T_0$, $T_1$, $T_2$) comportant une limite temporelle inférieure et une limite temporelle supérieure, la limite temporelle inférieure étant égale à un moment de détermination précédent des plusieurs moments de détermination successifs ($T_0$, $T_1$, $T_2$) et la limite temporelle supérieure étant égale à un moment de détermination ultérieur des plusieurs moments de détermination successifs ($T_0$, $T_1$, $T_2$) ou au moment de calcul respectif.

9. Procédé selon l'une des revendications 6 à 8,

une première détermination de l'état de mouvement pour le moment de détermination ($T_1$) étant effectuée sur la base d'une première période de détermination et une deuxième détermination de l'état de mouvement pour le moment de détermination étant effectuée sur la base d'une deuxième période de détermination ; la deuxième période de détermination étant différente de la première période de détermination et comprenant au moins un moment de mesure qui n'est pas compris dans la première période de détermination ;

la première détermination étant effectuée de manière préférée à un premier moment de calcul ($\lambda_1$) et la deuxième détermination étant effectuée à un deuxième moment de calcul ultérieur ($\lambda_2$), une limite temporelle supérieure de la deuxième période de temps de détermination se situant temporellement après le premier temps de calcul.

10. Procédé selon la revendication 1, chacune des quantités de conditions comprenant seulement des jeux de données de mesure, qui présentent le même temps de mesure ;

les écarts de capteur étant multipliés chacun, dans la fonction de régression, en cas de dépendance à la revendication 6, par une pondération, qui est une fonction de la différence de temps entre le moment de mesure de la quantité de conditions respective et le moment de détermination, pour lequel l'état de mouvement est déterminé.

11. Procédé selon l'une des revendications précédentes, les quantités de conditions comprenant au moins une restriction de composante sur au moins une composante du vecteur de vitesse et/ou du vecteur de vitesse angulaire sous la forme d'au moins une valeur de spécification de composante ; la fonction de régression dépendant par ailleurs d'un écart de composante entre l'au moins une valeur de spécification de composante et au moins une valeur de spécification de composante estimée.

12. Procédé selon la revendication 11, au moins une composante de vitesse angulaire dans le système de référence de corps étant utilisée comme valeur de spécification de composante, qui est déterminée en particulier par un capteur de vitesse de rotation ;

l'au moins un écart de composante étant multiplié dans la fonction de régression, en cas de dépendance à la revendication 6, par une pondération, qui est une fonction de la différence de temps entre un moment de mesure de la composante de vitesse angulaire et le moment de détermination, pour lequel l'état de mouvement est déterminé.

13. Procédé selon l'une des revendications précédentes, les jeux de données de mesure comprenant au moins un paramètre supplémentaire choisi parmi un éloignement de l'objet détecté, une variance de l'éloignement, une variance de l'angle azimutal, une variance de l'angle d'élévation, une variance de la vitesse Doppler, une intensité de signal du signal reçu, une section transversale, en particulier une section transversale radar ou lidar, dans chaque cas par rapport à l'objet détecté du jeu de données de mesure respectif et/ou un type de capteur et, en cas de dépendance à la revendication 3, une disposition du capteur sur le corps ;

les écarts de vitesse Doppler étant multipliés par une pondération supplémentaire, qui est une fonction du paramètre supplémentaire respectif, et/ou un jeu de données de mesure étant rejeté lorsque l'au moins un paramètre supplémentaire se situe en dehors d'au moins une plage prédéterminée.

14. Procédé selon l'une des revendications précédentes,

l'analyse de régression étant effectuée en utilisant un procédé de régression à erreur dans les variables, les angles azimutaux et/ou, en cas de dépendance à la revendication 2, les angles d'élévation étant optimisés ; et/ou l'analyse de régression étant effectuée en utilisant un procédé itératif des moindres carrés re-pondéré.

15. Procédé de détermination d'une position relative et/ou d'une orientation relative d'un corps rigide (2), comprenant

détermination de plusieurs états de mouvement du corps pour plusieurs moments de détermination successifs ($T_0$, $T_1$, $T_2$) avec un procédé selon l'une des revendications précédentes, en cas de dépendance à la revendication ;

intégration des états de mouvement dans le temps entre un moment de détermination initial des plusieurs moments de détermination et un moment de détermination final des plusieurs moments de détermination pour obtenir la position relative et/ou l'orientation relative comme résultats de ladite intégration.

16. Unité de calcul (12), qui est mise au point pour obtenir une pluralité de jeux de données de mesure ou, en cas de dépendance à la revendication 2, des résultats de mesure et pour mettre en œuvre un procédé selon l'une des revendications précédentes.

17. Véhicule et/ou robot, en particulier véhicule à moteur (2), comprenant une unité de calcul (12) selon la revendication 16, et

un ou plusieurs capteurs (S1, S2, S3, S4) installés sur un corps du véhicule et/ou du robot, qui détectent un environnement du corps et qui sont mis au point pour mettre en œuvre des mesures relatives à des objets dans l'environnement et envoyer des jeux de données de mesure détectés à l'unité de calcul ; les capteurs étant de manière préférée des capteurs radar et/ou des capteurs lidar.

18. Programme informatique qui amène une unité de calcul à mettre en œuvre toutes les étapes de procédé d'un procédé selon l'une des revendications 1 à 15, lorsqu'il est exécuté sur l'unité de calcul.

**19.** Support de stockage lisible par machine, sur lequel est stocké un programme informatique selon la revendication 18.

# Fig. 1

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200241124 A1
- DE 102017214022 A1
- DE 102019202178 A1
- US 20210063560 A1